# EUROPEAN PATENT SPECIFICATION

(11) **EP 3 307 748 B1**
(45) Date of publication and mention of the grant of the patent: **09.03.2022**
(21) Application number: 16729354.7
(22) Date of filing: 10.06.2016
(51) Int. Cl.: C07F 9/655, C07F 5/04, G01N 21/63

(54) **FRUSTRATED LEWIS PAIRS**
FRUSTRIERTE LEWIS-PAARE
PAIRES DE LEWIS FRUSTRÉES

(30) Priority: 12.06.2015 GB 201510312
(43) Date of publication of application: 18.04.2018
(73) Proprietor: Oxford University Innovation Limited, Oxford OX2 0JB (GB)
(72) Inventor: ALDRIDGE, Simon, Oxford OX1 3QR (GB); MO, Zhenbo, 10627 Berlin (DE)
(74) Representative: HGF
(86) International application number: PCT/GB2016/051736
(87) International publication number: WO 2016/198892

(56) References cited:
- MO Z ET AL: "Catalytic B-N Dehydrogenation Using Frustrated Lewis Pairs: Evidence for a Chain-Growth Coupling Mechanism", JOURNAL OF THE AMERICAN CHEMICAL SOCIETY, vol. 138, no. 10, 16 March 2016 (2016-03-16), pages 3306-3309, XP055291607, ISSN: 0002-7863, DOI: 10.1021/jacs.6b01170
- MO Z ET AL: "Facile Reversibility by Design: Tuning Small Molecule Capture and Activation by Single Component Frustrated Lewis Pairs", JOURNAL OF THE AMERICAN CHEMICAL SOCIETY, vol. 137, no. 38, 30 September 2015 (2015-09-30), pages 12227-12230, XP055291428, ISSN: 0002-7863, DOI: 10.1021/jacs.5b08614
- COWIE B E ET AL: "Bis-hydrocarbyl Platinum(II) Ambiphilic Ligand Complexes: Alkyl-Aryl Exchange between Platinum and Boron", ORGANOMETALLICS, vol. 34, no. 12, 22 June 2015 (2015-06-22) , pages 2737-2746, XP055291427, ISSN: 0276-7333, DOI: 10.1021/om501269x
- EMSLIE D J H ET AL: "A study of M-X-BR3 (M = Pt, Pd or Rh; X = Cl or I) interactions in square planar ambiphilic ligand complexes: structural, spectroscopic, electrochemical and computational comparisons with borane-free analogues", DALTON TRANSACTIONS, vol. 41, no. 12, 2012, pages 3523-3535, XP055291426, ISSN: 1477-9226, DOI: 10.1039/c2dt11991a
- COWIE B E ET AL: "Diversity of Metal-Ligand Interactions in Halide (X = I, Br, Cl, F) and Halide-Free Ambiphilic Ligand Rhodium Complexes", INORGANIC CHEMISTRY, vol. 49, no. 9, 3 May 2010 (2010-05-03), pages 4060-4072, XP055291613, ISSN: 0020-1669, DOI: 10.1021/ic902109p
- EMSLIE D J H ET AL: "Group 10 Transition-Metal Complexes of an Ambiphilic PSB-Ligand: Investigations into eta3(BCC)-Triarylborane Coordination", ORGANOMETALLICS, vol. 27, no. 20, 27 October 2008 (2008-10-27), pages 5317-5325, XP055291424, ISSN: 0276-7333, DOI: 10.1021/om800670e
- OAKLEY S R ET AL: "Synthesis of a Heterobimetallic Rhodium-Iron Complex Containing an [eta] 3 -Interaction between Rhodium and the B-C ipso -C ortho Unit of a Triarylborane", ORGANOMETALLICS, vol. 25, no. 25, 4 December 2006 (2006-12-04), pages 5835-5838, XP055291422, ISSN: 0276-7333, DOI: 10.1021/om060903m
- EMSLIE D J H ET AL: "A Zwitterionic Palladium(II) [eta] 3 -Boratoxypentadienyl Complex: Cooperative Activation of Dibenzylideneacetone between Palladium and a Phosphine/Thioether/Borane Ligand", ORGANOMETALLICS, vol. 25, no. 10, 8 May 2006 (2006-05-08), pages 2412-2414, XP055156506, ISSN: 0276-7333, DOI: 10.1021/om0602052
- STEPHAN D W: "Frustrated Lewis Pairs: From Concept to Catalysis", ACCOUNTS OF CHEMICAL RESEARCH, vol. 48, no. 2, 17 February 2015 (2015-02-17), pages 306-316, XP055294396, ISSN: 0001-4842, DOI: 10.1021/ar500375j
- KELLY M J ET AL: "Frustrated Lewis Pairs as Molecular Receptors: Colorimetric and Electrochemical Detection of Nitrous Oxide", ANGEWANDTE CHEMIE INTERNATIONAL EDITION, vol. 52, no. 52, 23 December 2013 (2013-12-23), pages 14094-14097, XP055177094, ISSN: 1433-7851, DOI: 10.1002/anie.201308475
- OTTEN E ET AL: "Complexation of Nitrous Oxide by Frustrated Lewis Pairs", JOURNAL OF THE AMERICAN CHEMICAL SOCIETY, vol. 131, no. 29, 29 July 2009 (2009-07-29), pages 9918-9919, XP055294411, ISSN: 0002-7863, DOI: 10.1021/ja904377v

## Description

### INTRODUCTION

The present invention relates to compounds lb comprising a Frustrated Lewis Pair. In particular, the present invention relates to the use of these compounds in the activation of small molecules, in catalysis and/or in the detection of small molecules.

### BACKGROUND OF THE INVENTION

The term Frustrated Lewis Pair (FLP) refers to the combination of a Lewis acid and a Lewis base which, due to steric hindrance, cannot combine to form a Lewis acid-base adduct. The inability of the Lewis acid and Lewis base to form a Lewis acid-base adduct creates an environment in between the Lewis acid and Lewis base in which a range of molecules can be activated by interaction with the FLP. For example, FLPs have been shown to be capable of activating inert molecules such as H₂ and CO₂.

The activation of inert molecules, such as H₂ and CO₂, is of significant commercial interest as it allows these abundant chemicals to be captured, activated and converted into other desirable usable compounds.

One problem with the FLPs that are currently available is that the reversibility of the interaction between the FLP and the small molecule substrate can be very poor, especially at ambient temperatures. This poor reversibility often requires harsh conditions to be employed in order to remove the activated molecule from the FLP and make it available for subsequently use. This requirement can result in costly operating conditions and an incompatibility of FLPs with certain small molecule substrates.

Also, many of the current FLPs consist of separate Lewis acid and Lewis base molecules. These 'two component' systems typically result in a lower association between the FLP and the inert molecule, due to a greater entropic loss upon binding. Furthermore, a low level of selectivity is often observed for these 'two component' systems.

Organometallic molecules and catalysts that are capable of activating small and inert molecules are available, but these molecules often contain rare metals and can be expensive. These molecules can also be toxic and require careful handling. As a consequence, alternative 'metal-free' molecules are desirable.

There is therefore a requirement for new 'metal-free' compounds that are capable of activating small inert molecules reversibly.

One small inert molecule of particular interest is nitrous oxide (N₂O). This compound is a major greenhouse gas and air pollutant. Nitrous oxide has also been associated with a number of public health risks such as sensory neuropathy, asphyxiation and anaemia. Nitrous oxide is found in many different fields, such as in engine combustion, aerosols, medicine and in recreational use. Thus, the detection of nitrous oxide is of significant importance.

Current methodologies for N₂O detection are based on infrared absorption. These current detection methods are susceptible to false positives and can also suffer from poor selectivity and sensitivity. In addition, infrared detectors can be quite expensive.

Chemical (as opposed to physical) methods of detecting nitrous oxide are extremely rare, due to the unreactive (inert) nature of the N₂O molecule. Moreover, systems capable of reversibly binding N₂O, a property essential in sensor design, are unknown to the inventors.

Cowie et al (Organometallics, vol. 34, no. 12, 22 June 2015, pages 2737-2746) describe the synthesis and reactivity of bis-hydrocarbyl platinum (II) complexes bearing phosphine-thioether-borane ambiphilic ligands.

Emslie et al (Dalton Transactions, vol. 41, no. 12, 2012, page 3523-353) describe a study of M-X=BR₃ (M = Pt, Pd or Rh; X=Cl or I) interactions in square planar ambiphilic ligand complexes.

Cowie et al (Inorganic Chemistry, vol. 49, no. 9, 3 May 2010, pages 4060-4072) describe the diversity of metal-ligand interactions in halide (X = I, Br, Cl, F) and halide-free ambiphilic ligand rhodium complexes.

Emslie et al (Organometallics, vol. 27, no. 20, 27 October 2008, pages 5317-5325) disclose the preparation of a free phosphine/thioether/borane ligand suitable to position a Lewis acidic borane in close proximity to a coordinated late transition metal.

Oakley et al (Organometallics, vol. 25, no. 25, 4 December 2006, pages 5835-5838) describe the synthesis of a heterobimetallic rhodium-iron complex containing an η3-Interaction between rhodium and the B-Cᵢₚₛₒ-Cₒᵣₜₕₒ unit of a triarylborane.

Emslie et al (Organometallics, vol. 25, no. 10, 8 May 2006, pages 2412-2414) describe the preparation of a free phosphine/thioether/borane ligand (5) suitable to position a Lewis acidic borane in close proximity to a coordinated late transition metal.

Stephan (Accounts of Chemical Research 2015 48 (2), 306-316) describes that Frustrated Lewis pair (FLP) chemistry has emerged in the past decade as a strategy that enables main-group compounds to activate small molecules.

Kelly et al (Angewandte Chemie International Edition, vol. 52, no. 52, 2013, pages 14094-14097) describe frustrated Lewis pairs as molecular receptors.

Otten et al (Journal of The American Chemical Society, vol.131, no. 29, 29 July 2009) describe the complexation of nitrous oxide by frustrated Lewis pairs.

Accordingly, there remains a need for new systems that are capable of selectively and reversibly binding to nitrous oxide. The system will also need to impart some detectable change in a given property in order to be compatible for use as a detector (sensor).

The present invention was devised with the foregoing in mind.

### SUMMARY OF THE INVENTION

According to a first aspect of the present invention, there is provided a compound of formula Ib, or a salt thereof: 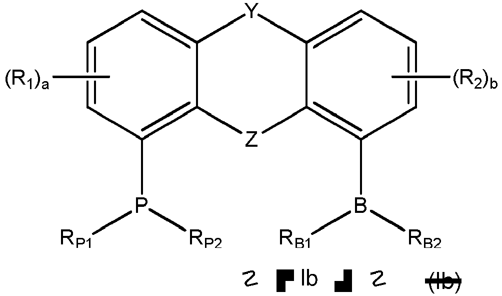 wherein:
Y is absent or selected from CRₐR_{b}, NR_{b}, O, SiR_{c}R_{d}, C=CR_{c}R_{d}, or S, wherein Rₐ and
R_{b} are independently selected from one or more groups comprising H, (1-6C)alkyl, (2-6C)alkenyl, (2-6C)alkynyl, (1-6C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, heterocyclyl-(1-2C)alkyl, cyano, nitro, hydroxy or halo, and R_{c} and R_{d} are independently selected from hydrogen, (1-4C)alkyl, (1-6C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, or heterocyclyl-(1-2C)alkyl;
Z is selected from O, CRₑR_{f}, NRₑ, SiRₑR_{f}, S, SO or SO₂, wherein Rₑ and R_{f} are independently selected from H or (1-2C)alkyl;
R_{P1} and R_{P2} are selected from (1-6C)alkyl, (4-6C)cycloalkyl or C₆H_{z}Me_{(5-z)} (where z is an integer between 0 and 5);
R_{B1} and R_{B2} are of the formula C₆XₙH₍₅₋ₙ₎ (where n is an integer between 1-5) and wherein each X is a halo or CF₃; and
each R₁ and R₂ is independently selected from (1-4C)alkyl, halo, trifluoromethyl, trifluoromethoxy, amino, cyano, hydroxy, nitro, S(O)_{y}Rₒ (where y is 0, 1 or 2), aryl, heteroaryl, NRₚR_{q}, ORₚ, wherein Rₒ is selected from (1-2C)alkyl or OH, and wherein
Rₚ and R_{q} are each independently selected from H or (1-4C)alkyl; and integers a and b are independently selected from 0 to 3.

Also disclosed,but not forming part of the invention, is a compound of the formula I, or a salt thereof, shown below 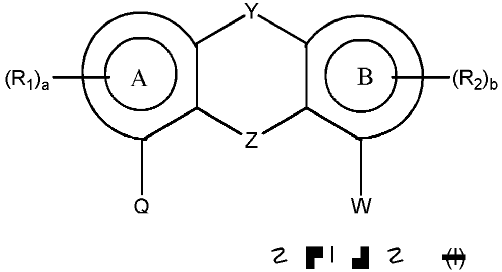 wherein:
Ring A and Ring B are independently selected from an aryl or a heteroaryl ring;
Y is absent or selected from CRₐR_{b}, NR_{b}, O, SiR_{c}R_{d}, C=CR_{c}R_{d}, or S, wherein Rₐ and R_{b} are independently selected from one or more groups comprising H, (1-6C)alkyl, (2-6C)alkenyl, (2-6C)alkynyl, (1-6C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, heterocyclyl-(1-2C)alkyl, cyano, nitro, hydroxy or halo, and R_{c} and R_{d} are independently selected from hydrogen, (1-4C)alkyl, (1-6C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, or heterocyclyl-(1-2C)alkyl;
Z is selected from O, CRₑR_{f}, NRₑ, SiRₑR_{f}, S, SO or SO₂, wherein Rₑ and R_{f} are independently selected from H or (1-2C)alkyl;
Q is selected from OR₃, NR₃R₄, wherein R₃ and R₄ are independently selected from (1-6C)alkyl, (4-6C)cycloalkyl or Si[(1-4C)alkyl]₃-(1-2C)alkyl, or Q is a group of the formula:

   PR_{P1}R_{P2}

   wherein R_{P1} and R_{P2} are independently selected from (1-8C)alkyl, Si[(1-4C)alkyl]₃-(1-2C)alkyl, Si[O(1-4C)alkyl)]₃-(1-2C)alkyl, (3-8C)cycloalkyl, (3-8C)cycloalkyl-(1-2C)alkyl, heterocyclyl, heterocyclyl-(1-2C)alkyl, heteroaryl, heteroaryl-(1-2C)alkyl, aryl or aryl-(1-2C)alkyl, each of which is optionally substituted by one or more groups selected from (1-6C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl; or
   R_{P1} and R_{P2} when taken together with the P atom to which they are attached collectively form a 5- to 7-membered heterocyclyl ring, which is optionally substituted by one or more groups selected from (1-6C)alkyl, (3-6C)cycloalkyl, Si[(1-4C)alkyl]₃, Si[O(1-4C)alkyl)]₃,ORᵢ, NRᵢRⱼ, aryl, halo or amino, and wherein Rᵢ and Rⱼ are selected from H or (1-4C)alkyl;
   and wherein said heterocyclyl ring is optionally fused with one or more mono-or bicyclic aryl, heteroaryl, hetereocyclyl or (3-8C)cyclocalkyl rings, each of which is optionally substituted by one or more groups selected from (1-6C)alkyl, (3-6C)cycloalkyl, Si[(1-4C)alkyl]₃, Si[O(1-4C)alkyl)]₃,ORᵢ, NRᵢRⱼ, aryl, halo or amino, and wherein Rᵢ and Rⱼ are selected from H or (1-4C)alkyl;
W is BR_{B1}R_{B2}, wherein R_{B1} and R_{B2} are of the formula C₆XₙH₍₅₋ₙ₎ (where n is an integer between 1-5) and wherein each X is a halo or CF₃; or
   R_{B1} and R_{B2} when taken together with the B atom to which they are attached collectively form a 6-membered heterocyclyl ring, wherein said heterocyclyl ring is fused with a one or more aryl, heteroaryl, hetereocyclyl or (3-8C)cyclocalkyl rings, and is further, optionally, substituted with (1-4C)alkyl, halo, nitro, CF₃ or cyano; and
each R₁ and R₂ is independently selected from (1-6C)alkyl, halo, trifluoromethyl, trifluoromethoxy, amino, cyano, hydroxy, nitro, S(O)_{y}Rₒ (where y is 0, 1 or 2), aryl, aryl-(1-2C)alkyl, aryl-(2-4C)alkenyl, heteroaryl, ORₚ, or NRₚR_{q}(Rₛ)_{w} (where w is 0 or 1, and wherein, when w is 1 the nitrogen to which the Rₛ group is attached becomes positively charged), and wherein Rₒ is selected from (1-2C)alkyl or OH, and each Rₚ, R_{q} and Rₛ is independently selected from H, (1-4C)alkyl or aryl; or
each R₁ and R₂ is independently selected from a group of the formula:

   -Lₓ-R₃

   wherein
   Lₓ is (2-4C)alkenylene or (2-4C)alkynylene; and
   R₃ is selected from H, (1-4C)alkyl, halo, trifluoromethyl, nitro, cyano, aryl or heteroaryl; and
integers a and b are independently selected from:
   i) 0 to 3, when Rings A and B are monocyclic aryl or monocyclic heteroaryl rings; and
   ii) 0 to 6, when Rings A and B are selected from a polycyclic aryl or polycyclic heteroaryl rings.

According to a second aspect of the present invention, there is provided a catalytic composition, as defined herein, which comprises a compound of the invention, as defined herein, associated with a suitable solid support.

According to a third aspect of the present invention, there is provided the use of a compound of the invention, as defined herein, or a catalytic composition of the invention, as defined herein, in small molecule activation. Also disclosed is a compound, as defined herein, or a composition, as defined herein, for use in small molecule activation.

According to a fourth aspect of the present invention, there is provided a compound of the invention, as defined herein, or a catalytic composition of the invention, as defined herein, for use in catalysis. Also disclosed is a compound, as defined herein, or a composition, as defined herein, for use in catalysis

According to a fifth aspect of the present invention, there is provided the use of a compound of the invention, as defined herein, or a catalytic composition of the invention, as defined herein, in the detection of a small molecule. Also disclosed is a compound, as defined herein, or a composition, as defined herein, for use in the detection of a small molecule.

According to a sixth aspect of the present invention, there is provided a process of detecting nitrous oxide which comprises contacting or reacting a compound of formula Ib according to the invention, as defined herein, or a composition of the invention, as defined herein, with nitrous oxide.

### DETAILED DESCRIPTION OF THE INVENTION

### Definitions

### Alkyl

Unless otherwise specified, the term "alkyl" as used herein includes reference to a straight or branched chain alkyl moieties, typically having 1, 2, 3, 4, 5 or 6 carbon atoms. This term includes reference to groups such as methyl, ethyl, propyl (n-propyl or isopropyl), butyl (n-butyl, sec-butyl or tert-butyl), pentyl, hexyl and the like. In particular, an alkyl may have 1, 2, 3 or 4 carbon atoms.

### Alkoxy

Unless otherwise specified, the term "alkoxy" as used herein include reference to - O-alkyl, wherein alkyl is straight or branched chain and comprises 1, 2, 3, 4, 5 or 6 carbon atoms. In one class of embodiments, alkoxy has 1, 2, 3 or 4 carbon atoms. This term includes reference to groups such as methoxy, ethoxy, propoxy, isopropoxy, butoxy, tert-butoxy, pentoxy, hexoxy and the like.

### Aryl

Unless otherwise specified, the term "aryl" as used herein includes reference to an aromatic ring system comprising 6, 7, 8, 9 or 10 ring carbon atoms. Aryl is often phenyl but may be a polycyclic ring system, having two or more rings, at least one of which is aromatic. This term includes reference to groups such as phenyl, naphthyl and the like. In particular embodiment, an aryl is phenyl.

The term "aryl(1-2C)alkyl" means an aryl group covalently attached to a (1-2C)alkylene group, both of which are defined herein. Examples of aryl-(1-2C)alkyl groups include benzyl, phenylethyl, and the like.

### Halogen

Unless otherwise specified, the term "halogen" or "halo" as used herein includes reference to F, Cl, Br or I. In a particular, halogen may be F or Cl, of which Cl is more common.

### Cycloalkyl

Unless otherwise specified, the term "cycloalkyl", "carbocyclyl", "carbocycle" or "carbocyclic" refers to a radical of a non-aromatic cyclic hydrocarbon group, generally having from 3 to 10 ring carbon atoms (i.e. (3-10C)cycloalkyl) and zero heteroatoms in the non-aromatic ring system. Suitably, cycloalkyl groups include (3-nC)cycloalkyl and (3-nC)cycloalkenyl. Exemplary embodiments include: cyclobutyl, cyclobutenyl, cyclopentyl, cyclopentenyl, cyclohexyl, cyclohexenyl, cyclohexadienyl, cycloheptyl, cycloheptenyl, cycloheptadienyl, cycloheptatrienyl, cyclooctyl, cyclooctenyl, bicyclo[2.2.1]heptanyl, bicyclo[2.2.2]octanyl, and the like.

### Heterocyclyl

Unless otherwise specified, the term "heterocyclyl", "heterocyclic" or "heterocycle" means a non-aromatic saturated or partially saturated monocyclic, fused, bridged, or spiro bicyclic heterocyclic ring system(s). The term heterocyclyl includes both monovalent species and divalent species. Monocyclic heterocyclic rings contain from about 3 to 12 (suitably from 3 to 6) ring atoms, with from 1 to 5 (suitably 1, 2 or 3) heteroatoms selected from nitrogen, oxygen or sulfur in the ring. Bicyclic heterocycles contain from 7 to 17 member atoms, suitably 7 to 12 member atoms, in the ring. Bicyclic heterocycles contain from about 7 to about 17 ring atoms, suitably from 7 to 12 ring atoms. Bicyclic heterocyclic(s) rings may be fused, spiro, or bridged ring systems. Examples of heterocyclic groups include cyclic ethers such as oxiranyl, oxetanyl, tetrahydrofuranyl, dioxanyl, and substituted cyclic ethers. Heterocycles containing nitrogen include, for example, azetidinyl, pyrrolidinyl, piperidinyl, piperazinyl, tetrahydrotriazinyl, tetrahydropyrazolyl, and the like. Typical sulfur containing heterocycles include tetrahydrothienyl, dihydro-1,3-dithiol, tetrahydro-2H-thiopyran, and hexahydrothiepine. Other heterocycles include dihydro-oxathiolyl, tetrahydro-oxazolyl, tetrahydro-oxadiazolyl, tetrahydrodioxazolyl, tetrahydro-oxathiazolyl, hexahydrotriazinyl, tetrahydro-oxazinyl, morpholinyl, thiomorpholinyl, tetrahydropyrimidinyl, dioxolinyl, octahydrobenzofuranyl, octahydrobenzimidazolyl, and octahydrobenzothiazolyl. For heterocycles containing sulfur, the oxidized sulfur heterocycles containing SO or SO2 groups are also included. Examples include the sulfoxide and sulfone forms of tetrahydrothienyl and thiomorpholinyl such as tetrahydrothiene 1,1-dioxide and thiomorpholinyl 1,1-dioxide. A suitable value for a heterocyclyl group which bears 1 or 2 oxo (=O) or thioxo (=S) substituents is, for example, 2-oxopyrrolidinyl, 2-thioxopyrrolidinyl, 2-oxoimidazolidinyl, 2-thioxoimidazolidinyl, 2-oxopiperidinyl, 2,5-dioxopyrrolidinyl, 2,5-dioxoimidazolidinyl or 2,6-dioxopiperidinyl. Particular heterocyclyl groups are saturated monocyclic 3 to 7 membered heterocyclyls containing 1, 2 or 3 heteroatoms selected from nitrogen, oxygen or sulfur, for example azetidinyl, tetrahydrofuranyl, tetrahydropyranyl, pyrrolidinyl, morpholinyl, tetrahydrothienyl, tetrahydrothienyl 1,1-dioxide, thiomorpholinyl, thiomorpholinyl 1,1-dioxide, piperidinyl, homopiperidinyl, piperazinyl or homopiperazinyl. As the skilled person would appreciate, any heterocycle may be linked to another group via any suitable atom, such as via a carbon or nitrogen atom. However, reference herein to piperidino or morpholino refers to a piperidin-1-yl or morpholin-4-yl ring that is linked via the ring nitrogen.

### Substitued

Unless otherwise specified, the term "substituted" as used herein in reference to a moiety means that one or more, especially up to 5, more especially 1, 2 or 3, of the hydrogen atoms in said moiety are replaced independently of each other by the corresponding number of the described substituents. The term "optionally substituted" as used herein means substituted or unsubstituted.

It will, of course, be understood that substituents are only at positions where they are chemically possible, the person skilled in the art being able to decide (either experimentally or theoretically) without inappropriate effort whether a particular substitution is possible. For example, amino or hydroxy groups with free hydrogen may be unstable if bound to carbon atoms with unsaturated (e.g. olefinic) bonds. Additionally, it will of course be understood that the substituents described herein may themselves be substituted by any substituent, subject to the aforementioned restriction to appropriate substitutions as recognised by the skilled person.

Unless otherwise specified, the term "optionally substituted" refers to either groups, structures, or molecules that are substituted and those that are not substituted. The term "wherein a/any CH, CH₂, CH₃ group or heteroatom (i.e. NH) within a R¹ group is optionally substituted" suitably means that (any) one of the hydrogen radicals of the R¹ group is substituted by a relevant stipulated group.

Where optional substituents are chosen from "one or more" groups it is to be understood that this definition includes all substituents being chosen from one of the specified groups or the substituents being chosen from two or more of the specified groups.

The phrase "compound of the invention" means those compounds which are disclosed herein, both generically and specifically.

### Lewis Acid

Unless otherwise specified, the term "Lewis acid" refers to a substance that can accept a pair of non-bonding electrons. In other words, a Lewis acid can be defined as an electron-pair acceptor. Lewis acids can include atoms, ions and molecules which are capable of accepting a pair of electrons. A non-exhaustive list of Lewis acids include: B(C₆F₅)₃, BF₃, BCl₃, AlCl₃, AlBr₃, SiX₄, FeCl₃, FeBr₃ and SnCl₄.

### Lewis Base

Unless otherwise specified, the term "Lewis base" refers to a substance that can donate a pair of non-bonding electrons. In other words, a Lewis base can be defined as an electron-pair donor. Lewis acids can include atoms, ions and molecules which are capable of donating a pair of electrons. A non-exhaustive list of Lewis bases include: P*t*Bu₃, PPh₃, PMe₃, NH₃, NMe₃, pyridine, OEt₂, SMe₂.

### Frustrated Lewis Pair

Unless otherwise specified, the term "Frustrated Lewis Pair" refers to a compound or mixture that contains both a Lewis acid and Lewis base that, because of steric hindrance, cannot combine to form a Lewis acid-base adduct.

### Change in absorption or emission spectrum

Unless otherwise specified, the term "change in absorption or emission spectrum" refers to a change in the electromagnetic radiation properties of a particular compound, mixture or composition. The change in electromagnetic radiation properties may, for example, be a change in colour, fluorescence or phosphorescence. The change in electromagnetic radiation properties may be induced by various factors including, but not limited to, binding to a substrate, a change in concentration, a change in aggregation state, a change in conformation or a combination of all of the above.

### Associated

Unless otherwise specified, the term "associated" refers to any form of covalent or non-covalent interaction. The term "associated" may therefore refer to covalent bonds (such as single, double or triple bonds, or donor/acceptor bonds) and/or non-covalent interactions (such as hydrogen bonds, van der Waals, ionic bonds and hydrophobic interactions).

The phrase "compound of the present invention" means those compounds which are disclosed herein, both generically and specifically.

### Compounds of the invention

As described hereinbefore, the present invention provides a compound of the formula Ib as defined herein.

The compounds of the present invention comprise a suitable Frustrated Lewis Pair. Suitably, the Frustrated Lewis Pair comprises Q as the Lewis base and W as the Lewis acid.

The distance between the O, N or P atom of Q and the B atom of W is believed to be important for the effective functioning of the compounds of the present invention. Suitably, the distance between the O, N or P atom of Q and the B atom of W is between 4 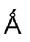 and 5 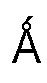 . More suitably, the distance between O, N or P atom of Q and the B atom of W is between 4.4 Å and 4.9 Å. Most suitably, the distance between O, N or P atom of Q and the B atom of W is between 4.4 Å and 4.7 Å.

The compounds of the present invention display superior reversible binding and activation of small molecules when compared to current small molecule activators that are available. In particular, certain compounds of the present invention display excellent reversible binding and activation of small inert molecules at room temperature. Further, the compounds of the present invention may display a significant change in optical properties upon small molecule binding (activation), which renders them particularly suitable for the detection of small molecules (e.g. N₂O).

Particular compounds of the disclosure include, for example, compounds of the formula (I), wherein, unless otherwise stated, each of X, Z, Q, W, R₁, R₂ and any associated substituent group has any of the meanings defined hereinbefore or in any of paragraphs (1) to (49) hereinafter. Particular compounds of the invention include, for example, compounds of the formula (lb), wherein, unless otherwise stated, each of X, Z, Q, W, R₁, R₂ and any associated substituent group has any of the meanings defined hereinbefore or in any of paragraphs (1) to (16), (26) to (31), (35) to (40) and (44) to (49) hereinafter:-
(1) Ring A and Ring B are independently selected from a mono- or bicyclic aryl or heteroaryl;
(2) Ring A and Ring B are independently selected from a mono-cyclic aryl or heteroaryl;
(3) Ring A and Ring B are independently selected from phenyl or naphthyl;
(4) Ring A and Ring B are phenyl;
(5) Y is absent or selected from CRₐR_{b}, NR_{b}, O, SiR_{c}R_{d}, C=CR_{c}R_{d}, or S, wherein Rₐ and R_{b} are independently selected from one or more groups comprising H, (1-4C)alkyl, (2-4C)alkenyl, (1-4C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, heterocyclyl-(1-2C)alkyl, cyano, nitro, hydroxy or halo, and R_{c} and R_{d} are independently selected from hydrogen, (1-4C)alkyl, (1-4C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, or heterocyclyl-(1-2C)alkyl;
(6) Y is absent or selected from CRₐR_{b}, NR_{b}, O, SiR_{c}R_{d}, C=CR_{c}R_{d}, or S, wherein Rₐ and R_{b} are independently selected from H, (1-4C)alkyl, (2-4C)alkenyl, aryl, aryl-(1-2C)alkyl, heteroaryl, heteroaryl-(1-2C)alkyl, cyano, nitro or halo, and R_{c} and R_{d} are independently selected from (1-4C)alkyl;
(7) Y is selected from CRₐR_{b}, NR_{b}, O, SiR_{c}R_{d}, C=CR_{c}R_{d}, or S, wherein Rₐ and R_{b} are independently selected from one or more groups comprising H, (1-4C)alkyl, aryl or aryl-(1-2C)alkyl, and R_{c} and R_{d} are independently selected from H or (1-2C)alkyl;
(8) Y is selected from CRₐR_{b}, NR_{b}, O or S, wherein Rₐ and R_{b} are independently selected from one or more groups comprising H, (1-4C)alkyl, aryl or aryl-(1-2C)alkyl, and R_{c} and R_{d} are independently selected from H or (1-2C)alkyl;
(9) Y is selected from CRₐR_{b}, NR_{b}, O or S, wherein Rₐ and R_{b} are independently selected from one or more groups comprising H, (1-4C)alkyl, phenyl or phenyl-(1-2C)alkyl;
(10) Y is CRₐR_{b}, wherein Rₐ and R_{b} are independently selected from one or more groups comprising H or (1-4C)alkyl;
(11) Y is C(CH₃)₂;
(12) Z is selected from O, CRₑR_{f}, NRₑ, or S, wherein Rₑ and R_{f} are independently selected from H or (1-2C)alkyl;
(13) Z is selected from O, CRₑR_{f} or NRₑ, wherein Rₑ and R_{f} are independently selected from H or (1-2C)alkyl;
(14) Z is selected from O or CRₑR_{f}, wherein Rₑ and R_{f} are independently selected from H or (1-2C)alkyl;
(15) Z is selected from O or CRₑR_{f}, wherein Rₑ and R_{f} are independently selected from H or methyl;
(16) Z is O;
(17) Q is selected from OR₃, NR₃R₄, wherein R₃ and R₄ are independently selected from (1-6C)alkyl, (4-6C)cycloalkyl or Si[(1-4C)alkyl]₃-(1-2C)alkyl, or Q is a group of the formula:

   -PR_{P1}R_{P2}

   wherein R_{P1} and R_{P2} are independently selected from (1-8C)alkyl, Si[(1-4C)alkyl]₃-(1-2C)alkyl, Si[O(1-4C)alkyl)]₃-(1-2C)alkyl, (3-8C)cycloalkyl, heterocyclyl, aryl or aryl-(1-2C)alkyl, each of which is optionally substituted by one or more groups selected from (1-6C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl;
   or R_{P1} and R_{P2} when taken together with the P atom to which they are attached collectively form a 5- to 7-membered heterocyclyl ring, which is optionally substituted by one or more groups selected from (1-6C)alkyl, (3-6C)cycloalkyl, Si[(1-4C)alkyl]₃, Si[O(1-4C)alkyl)]₃,ORᵢ, NRᵢRⱼ, aryl, halo or amino, and wherein Rᵢ and Rⱼ are selected from H or (1-4C)alkyl;
   and wherein said heterocyclyl ring is optionally fused with one or more mono- or bicyclic aryl, heteroaryl, hetereocyclyl or (3-8C)cyclocalkyl rings, each of which is optionally substituted by one or more groups selected from (1-4C)alkyl, (3-4C)cycloalkyl, Si[(1-4C)alkyl]₃, Si[O(1-4C)alkyl)]₃,ORᵢ, NRᵢRⱼ, aryl, halo or amino, and wherein Rᵢ and Rⱼ are selected from H or (1-4C)alkyl;
(18) Q is selected from OR₃, NR₃R₄, wherein R₃ and R₄ are independently selected from (1-6C)alkyl, or
   Q is a group of the formula:

   PR_{P1}R_{P2}

   wherein R_{P1} and R_{P2} are independently selected from (1-8C)alkyl, Si[(1-4C)alkyl]₃-(1-2C)alkyl, Si[O(1-4C)alkyl)]₃-(1-2C)alkyl, (3-8C)cycloalkyl, heterocyclyl, aryl or aryl-(1-2C)alkyl, wherein said cycloalkyl, heterocyclyl, aryl or aryl-(1-2C)alkyl is optionally substituted by one or more groups selected from (1-6C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl; or
   R_{P1} and R_{P2} when taken together with the P atom to which they are attached collectively form a 5- to 7-membered heterocyclyl ring, which is optionally substituted by one or more groups selected from (1-4C)alkyl, ORᵢ, NRᵢRⱼ, aryl, halo or amino, and wherein Rᵢ and Rⱼ are selected from H or (1-4C)alkyl;
   and wherein said heterocyclyl ring is optionally fused with one or more mono- or bicyclic aryl or heteroaryl rings, each of which is optionally substituted by one or more groups selected from (1-4C)alkyl, ORᵢ, NRᵢRⱼ, aryl, halo or amino, and wherein Rᵢ and Rⱼ are selected from H or (1-4C)alkyl;
(19) Q is selected from OR₃, NR₃R₄, wherein R₃ and R₄ are independently selected from (1-6C)alkyl, or Q is a group of the formula:

   PR_{P1}R_{P2}

   wherein R_{P1} and R_{P2} are independently selected from (1-8C)alkyl, Si[(1-4C)alkyl]₃-(1-2C)alkyl, Si[O(1-4C)alkyl)]₃-(1-2C)alkyl, cycloalkyl, heterocyclyl, aryl or aryl-(1-2C)alkyl, wherein said cycloalkyl, heterocyclyl, aryl or aryl-(1-2C)alkyl is optionally substituted by one or more groups selected from (1-4C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl; or
   R_{P1} and R_{P2} when taken together with the P atom to which they are attached collectively form a 5- to 7-membered heterocyclyl ring, which is optionally substituted by one or more groups selected from (1-4C)alkyl;
   and wherein said heterocyclyl ring is optionally fused with one or more mono- or bicyclic aryl or heteroaryl rings;
(20) Q is a group of the formula:

   PR_{P1}R_{P2}

   wherein R_{P1} and R_{P2} are independently selected from (1-6C)alkyl, Si[(1-4C)alkyl]₃-(1-2C)alkyl, Si[O(1-4C)alkyl)]₃-(1-2C)alkyl, cycloalkyl, heterocyclyl, aryl or aryl-(1-2C)alkyl, wherein said cycloalkyl, heterocyclyl, aryl or aryl-(1-2C)alkyl is optionally substituted by one or more groups selected from (1-4C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl; or
   R_{P1} and R_{P2} when taken together with the P atom to which they are attached collectively form a 5- to 7-membered heterocyclyl ring, wherein said heterocyclyl ring is optionally substituted with (1-4C)alkyl, and/or wherein said heterocyclyl ring is, optionally, fused with one or more mono- or bicyclic aryl rings.
(21) Q is a group of the formula:

   PR_{P1}R_{P2}

   wherein R_{P1} and R_{P2} are independently selected from (1-6C)alkyl, Si[(1-4C)alkyl]₃-(1-2C)alkyl, Si[O(1-4C)alkyl)]₃-(1-2C)alkyl, cycloalkyl, heterocyclyl, aryl or aryl-(1-2C)alkyl, wherein said cycloalkyl, heterocyclyl, aryl or aryl-(1-2C)alkyl is optionally substituted by one or more groups selected from (1-4C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl; or Q has one of the structures shown below: 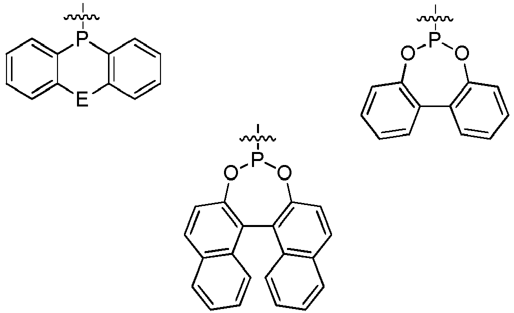 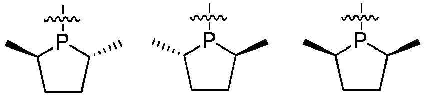 wherein E is selected from O, S, NRᵢ, CRₖRₗ, wherein Rₖ and Rₗ are selected from H or (1-2C)alkyl;
(22) Q is a group of the formula:

   PR_{P1}R_{P2}

   wherein R_{P1} and R_{P2} are independently selected from (1-6C)alkyl or aryl, wherein said aryl is optionally substituted by one or more groups selected from (1-4C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl;
(23) Q is a group of the formula:

   PR_{P1}R_{P2}

   wherein R_{P1} and R_{P2} are aryl, wherein said aryl is optionally substituted by one or more groups selected from (1-4C)alkyl, (3-6C)cycloalkyl, Si[(1-4C)alkyl]₃, Si[O(1-4C)alkyl)]₃,OR_{g}, NR_{g}Rₕ, aryl, halo or amino, and wherein R_{g} and Rₕ are selected from H or (1-4C)alkyl;
(24) Q is a group of the formula:

   PR_{P1}R_{P2}

   wherein R_{P1} and R_{P2} are phenyl, wherein said phenyl is optionally substituted by one or more groups selected from (1-4C)alkyl, OR_{g}, NR_{g}Rₕ, halo or amino, and wherein R_{g} and Rₕ are selected from H or (1-4C)alkyl;
(25) Q is a group of the formula:

   PR_{P1}R_{P2}

   wherein R_{P1} and R_{P2} are phenyl, wherein said phenyl is optionally substituted by one or more groups selected from (1-4C)alkyl or halo;
(26) Q is PR_{P1}R_{P2} and wherein R_{P1} and R_{P2} are each of the formula C₆H_{z}Me_{(5-z)} (where z is an integer between 0 and 5);
(27) Q is PR_{P1}R_{P2} where R_{P1} and R_{P2} are selected from phenyl, C₆H₄Me (2-, 3- and 4-isomers), C₆H₃Me₂ (2,3-, 2,4-, 2,5-, 2,6-, 3,4-, and 3,5-isomers), C₆H₂Me₃ (2,3,4-, 2,3,5-, 2,3,6-, 2,4,5-, 3,4,5-, 2,5,6- and 2,4,6-isomers), C₆HMe₄ (2,3,4-isomer) or C₆Mes;
(28) Q is PR_{P1}R_{P2} where R_{P1} and R_{P2} are selected from C₆H₃Me₂ (2,4-, 2,6- and 3,5-isomers), C₆H₂Me₃ (3,4,5-, and 2,4,6-isomers), C₆HMe₄ (2,3,4-isomer) or C₆Me₅;
(29) Q is PR_{P1}R_{P2} where R_{P1} and R_{P2} are selected from C₆H₃Me₂ (2,6- and 3,5-isomers) or C₆H₂Me₃ (3,4,5-, and 2,4,6-isomers);
(30) Q is PR_{P1}R_{P2} where R_{P1} and R_{P2} are C₆H₂Me₃ (3,4,5-, and 2,4,6-isomers);
(31) Q is PR_{P1}R_{P2} where R_{P1} and R_{P2} are C₆H₂Me₃ (2,4,6-isomer);
(32) W is BR_{B1}R_{B2}, wherein R_{B1} and R_{B2} are of the formula C₆XₙH₍₅₋ₙ₎ (where n is an integer between 1-5) and wherein each X is independently a halo or CF₃; or R_{B1} and R_{P2} when taken together with the B atom to which they are attached collectively form a 6-membered heterocyclyl ring, wherein said heterocyclyl ring is fused with a one or more aryl rings, and is further, optionally, substituted with one or more (1-4C)alkyl;
(33) W is BR_{B1}R_{B2}, wherein R_{B1} and R_{B2} are of the formula C₆XₙH₍₅₋ₙ₎ (where n is an integer between 1-5) and wherein each X is independently a halo or CF₃; or W is a group of the formula: 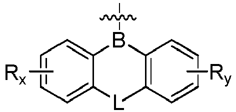 wherein:
   Rₓ and R_{y} are independently selected from one or more groups selected from H, halo, nitro, CF₃ or cyano;
   L is selected from O, S, NRₘ, CRₘRₙ, wherein Rₘ and Rₙ are selected from H or (1-2C)alkyl;
(34) W is BR_{B1}R_{B2}, wherein R_{B1} and R_{B2} are of the formula C₆XₙH₍₅₋ₙ₎ (where n is an integer between 1-5) and wherein each X is independently a halo or CF₃; or W is a group of the formula: 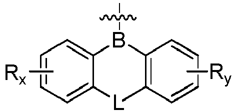 wherein:
   Rₓ and R_{y} are independently selected from one or more groups selected from H, halo, or CF₃;
   L is selected from O, CRₘRₙ, wherein Rₘ and Rₙ are selected from H or (1-2C)alkyl;
(35) W is BR_{B1}R_{B2}, wherein R_{B1} and R_{B2} are of the formula C₆XₙH₍₅₋ₙ₎ (where n is an integer between 1-5) and wherein each X is independently a halo or CF₃;
(36) W is BR_{B1}R_{B2}, wherein R_{B1} and R_{B2} are of the formula C₆XₙH₍₅₋ₙ₎ (where n is an integer between 1-5) and wherein each X is independently a halo or CF₃;
(37) W is BR_{B1}R_{B2}, wherein R_{B1} and R_{B2} are of the formula C₆XₙH₍₅₋ₙ₎ (where n is an integer between 1-5) and wherein X is a fluoro, chloro or CF;
(38) W is BR_{B1}R_{B2}, wherein R_{B1} and R_{B2} are of the formula C₆XₙH₍₅₋ₙ₎ (where n is an integer between 1-5) and wherein X is a fluoro;
(39) W is BR_{B1}R_{B2}, wherein R_{B1} and R_{B2} are independently selected from C₆F₅, C₆F₄H (2,3,4-isomers), C₆F₃H₂ (2,3-, 2,4-, 2,5-, 2,6-, 3,4- and 3,5-isomers), C₆F₂H₃ (2,3-, 2,4-, 2,5-, 2,6-, 3,4- and 3,5-isomers);
(40) W is B(C₆F₅)₂;
(41) each R₁ and R₂ is independently selected from (1-4C)alkyl, halo, trifluoromethyl, trifluoromethoxy, amino, cyano, hydroxy, nitro, S(O)_{y}Rₒ (where y is 0, 1 or 2), aryl, aryl-(1-2C)alkyl, aryl-(2-4C)alkenyl, heteroaryl, ORₚ, or NRₚR_{q}(Rₛ)_{w} (where w is 0 or 1, and wherein, when w is 1 the nitrogen to which the Rₛ group is attached becomes positively charged), and wherein Rₒ is selected from (1-2C)alkyl or OH, and each Rₚ, R_{q} and Rₛ is independently selected from H, (1-4C)alkyl or aryl; or each R₁ and R₂ is independently selected from a group of the formula:

   Lₓ-R₃

   wherein
   Lₓ is (2-4C)alkenylene or (2-4C)alkynylene; and
   R₃ is selected from H, (1-4C)alkyl, halo or aryl;
(42) each R₁ and R₂ is independently selected from (1-4C)alkyl, halo, trifluoromethyl, trifluoromethoxy, amino, cyano, nitro, SO₃H, aryl, ORₚ, or NRₚR_{q}(Rₛ)_{w} (where w is 0 or 1, and wherein, when w is 1 the nitrogen to which the Rₛ group is attached becomes positively charged), and wherein each Rₚ, R_{q} and Rₛ is independently selected from H, (1-2C)alkyl; or
   each R₁ and R₂ is independently selected from a group of the formula:

   Lₓ-R₃

   wherein
   Lₓ is (2-4C)alkenylene or (2-4C)alkynylene; and
   R₃ is selected from H, (1-4C)alkyl, halo or aryl;
(43) each R₁ and R₂ is independently selected from (1-4C)alkyl, halo, trifluoromethyl, trifluoromethoxy, amino, cyano, hydroxy, nitro, S(O)_{y}Rₒ (where y is 0, 1 or 2), aryl, aryl-(1-2C)alkyl, aryl-(2-4C)alkenyl, heteroaryl, ORₚ, or NRₚR_{q}(Rₛ)_{w} (where w is 0 or 1, and wherein, when w is 1 the nitrogen to which the Rₛ group is attached becomes positively charged), and wherein Rₒ is selected from (1-2C)alkyl or OH, and each Rₚ, R_{q} and Rₛ is independently selected from H, (1-4C)alkyl or aryl;
(44) each R₁ and R₂ is independently selected from (1-4C)alkyl, SO₃H, ORₚ, or NRₚR_{q}, and wherein Rₚ and R_{q} are independently selected from H or (1-4C)alkyl;
(45) each R₁ and R₂ is independently selected from (1-4C)alkyl, SO₃H, ORₚ, or NRₚR_{q}, and wherein each Rₚ and R_{q} is independently selected from H or (1-2C)alkyl;
(46) integers a and b are independently selected from 0 to 3;
(47) integers a and b are independently selected from 0 to 2;
(48) integers a and b are independently selected from 0 to 1;
(49) integers a and b are both 0.

In a particular group of compounds of the disclosure, but not forming part of the invention, Q is PR_{P1}R_{P2} and W is BR_{B1}R_{B2}. i.e. the compounds have the structural formula la (a sub-definition of formula I) shown below:

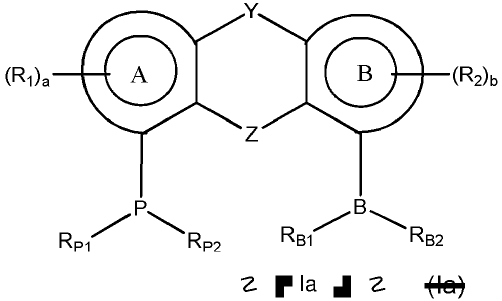

In a group of the compounds of formula la:
Ring A and Ring B are as defined in any one of paragraphs (1) to (4) above;
Y is as defined in any one of paragraphs (5) to (11) above;
Z is as defined in any one of paragraphs (12) to (16) above;
R_{P1} and R_{P2} are as defined in any one of paragraphs (17) to (31) above;
R_{B1} and R_{B2} are as defined in any one of paragraphs (32) to (40) above;
R₁ and R₂ are as defined in any one of paragraphs (41) to (45) above; and Integers a and b are as defined in any one of paragraphs (46) to (49) above.

In a group of the compounds of formula la:
Ring A and Ring B are as defined in any one of paragraphs (3) to (4) above;
Y is as defined in any one of paragraphs (8) to (11) above;
Z is as defined in any one of paragraphs (14) to (16) above;
R_{P1} and R_{P2} are as defined in any one of paragraphs (26) to (31) above;
R_{B1} and R_{B2} are as defined in any one of paragraphs (35) to (40) above;
R₁ and R₂ are as defined in any one of paragraphs (43) to (45) above; and Integers a and b are as defined in any one of paragraphs (47) to (49) above.

In a group of the compounds of formula la:
Ring A and Ring B are as defined in any one of paragraphs (3) or (4) above;
Y is as defined in any one of paragraphs (10) or (11) above;
Z is as defined in any one of paragraphs (15) or (16) above;
R_{P1} and R_{P2} are as defined in any one of paragraphs (29) to (31) above;
R_{B1} and R_{b2} are as defined in any one of paragraphs (37) to (40) above;
R₁ and R₂ are as defined in any one of paragraphs (44) or (45) above; and integers a and b are as defined in any one of paragraphs (48) or (49) above.

In the compounds of the invention, Q is PR_{P1}R_{P2}, W is BR_{B1}R_{B2} and Ring A and Ring B are as shown below, i.e. the compounds have the structural formula Ib (a sub-definition of formula I) shown below:

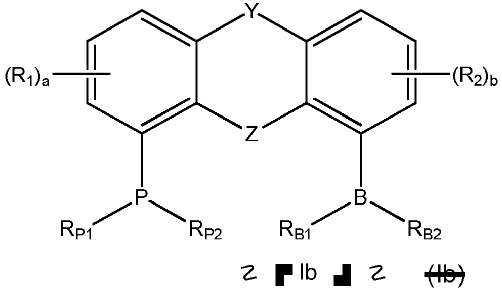

In an embodiment of the compounds of formula Ib:
Y is as defined in any one of paragraphs (5) to (11) above;
Z is as defined in any one of paragraphs (12) to (16) above;
R_{P1} and R_{P2} are as defined in any one of paragraphs (26) to (31) above;
R_{B1} and R_{B2} are as defined in any one of paragraphs (35) to (40) above;
R₁ and R₂ are as defined in any one of paragraphs (44) or (45) above; and Integers a and b are as defined in any one of paragraphs (46) to (49) above.

In another embodiment of the compounds of formula Ib:
Y is as defined in any one of paragraphs (8) to (11) above;
Z is as defined in any one of paragraphs (14) to (16) above;
R_{P1} and R_{P2} are as defined in any one of paragraphs (26) to (31) above;
R_{B1} and R_{B2} are as defined in any one of paragraphs (35) to (40) above;
R₁ and R₂ are as defined in any one of paragraphs (44) or (45) above; and Integers a and b are as defined in any one of paragraphs (47) to (49) above.

In another embodiment of the compounds of formula Ib:
Y is as defined in any one of paragraphs (10) or (11) above;
Z is as defined in any one of paragraphs (15) or (16) above;
R_{P1} and R_{P2} are as defined in any one of paragraphs (29) to (31) above;
R_{B1} and R_{b2} are as defined in any one of paragraphs (37) to (40) above;
R₁ and R₂ are as defined in any one of paragraphs (44) or (45) above; and integers a and b are as defined in any one of paragraphs (48) or (49) above.

In a particular group of compounds of the invention, Q is PR_{P1}R_{P2}, W is BR_{B1}R_{B2}, integers a and b are 0, Z is O and Ring A and Ring B are as shown below, i.e. the compounds have the structural formula Ic (a sub-definition of formula I) shown below:

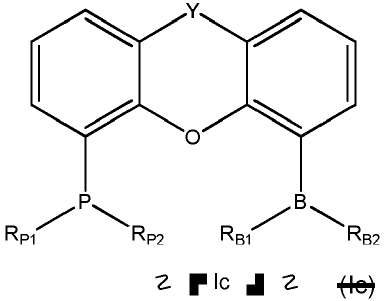

In an embodiment of the compounds of formula Ic:
Y is as defined in any one of paragraphs (5) to (11) above;
R_{P1} and R_{P2} are as defined in any one of paragraphs (26) to (31) above; and
R_{B1} and R_{B2} are as defined in any one of paragraphs (35) to (40) above.

In another embodiment of the compounds of formula Ic:
Y is as defined in any one of paragraphs (8) to (11) above;
R_{P1} and R_{P2} are as defined in any one of paragraphs (26) to (31) above; and
R_{B1} and R_{B2} are as defined in any one of paragraphs (35) to (40) above.

In another embodiment of the compounds of formula Ic:
Y is as defined in any one of paragraphs (10) or (11) above;
R_{P1} and R_{P2} are as defined in any one of paragraphs (29) to (31) above; and
R_{B1} and R_{B2} are as defined in any one of paragraphs (37) to (40) above.

In a particular group of compounds of the invention, Q is PR_{P1}R_{P2}, W is BR_{B1}R_{B2}, integers a and b are 0, Z is O, Y is C(CH₃)₂ and Ring A and Ring B are as shown below, i.e. the compounds have the structural formula Id (a sub-definition of formula I) shown below:

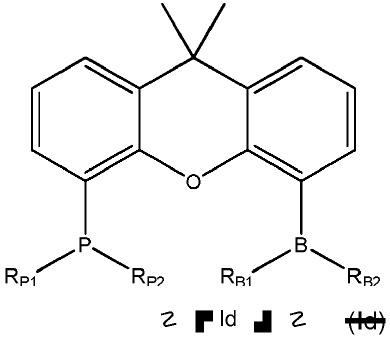

In an embodiment of the compounds of formula Id:
R_{P1} and R_{P2} are as defined in any one of paragraphs (26) to (31) above; and
R_{B1} and R_{B2} are as defined in any one of paragraphs (35) to (40) above.

In another embodiment of the compounds of formula Id:
R_{P1} and R_{P2} are as defined in any one of paragraphs (26) to (31) above; and
R_{B1} and R_{B2} are as defined in any one of paragraphs (35) to (40) above.

In another embodiment of the compounds of formula Id:
R_{P1} and R_{P2} are as defined in any one of paragraphs (29) to (31) above; and
R_{B1} and R_{B2} are as defined in any one of paragraphs (37) to (40) above.

Particular compounds of the present invention include any of the compounds exemplified in the present application, or a pharmaceutically acceptable salt or solvate thereof, and, in particular: 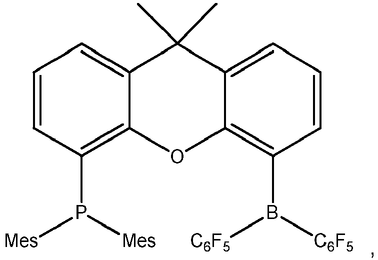 and the following two compounds, which are not claimed:

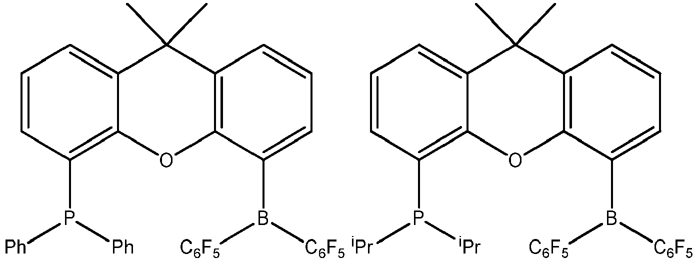

### Compositions

As defined hereinbefore, the present invention provides a composition comprising a compound, as defined herein, associated with a suitable solid support.

Suitably, when envisaged for use in catalysis or the detection of small molecules, the compounds of the present invention are associated with a suitable solid support as defined herein. The compounds of the invention may be associated directly with the solid support, or via a suitable linker. The compounds of the invention may be associated with the solid support by means of one or more ionic or covalent interactions.

The compounds of the present invention may be linked to the solid support by means of one or more covalent bond formed between the solid support and a functional group, as defined herein, at any suitable position on the compound. For example the compounds of the present invention may be linked to the solid support by a covalent bond between the solid support and one or more of the functional groups defined at positions Y, Z, Q, W, R₁ and/or R₂.

Any suitable solid support may be used. Examples of suitable solid supports are well known in the art and include, but are not limited to, paper, silica, silica-MAO, alumina, zirconia, titania and polymeric resins (e.g. polystyrene, polyamide and PEG-based resins).

Immobilizing the compounds of the present invention on a suitable solid support may be desirable for catalysis or detection (e.g. nitrous oxide detection) applications. In particular, the immobilization of the compounds of the present invention on a suitable solid support may improve the activity and the separation and/or recovery of the product and the compound of the present invention following the reaction.

Furthermore, the immobilization of the compounds of the present invention on a suitable solid support may result in superior changes in optical properties upon small molecule binding (e.g. N₂O).

### Synthesis

In the description of the synthetic methods described below and in the referenced synthetic methods that are used to prepare the starting materials, it is to be understood that all proposed reaction conditions, including choice of solvent, reaction atmosphere, reaction temperature, duration of the experiment and workup procedures, can be selected by a person skilled in the art.

It will be understood by one skilled in the art of organic/inorganic synthesis that the functionality present on various portions of the molecule must be compatible with the reagents and reaction conditions utilised.

Necessary starting materials may be obtained by standard procedures of organic chemistry. The preparation of such starting materials is described in conjunction with the following representative process variants and within the accompanying Examples. Alternatively necessary starting materials are obtainable by analogous procedures to those illustrated which are within the ordinary skill of an organic chemist.

It will be appreciated that during the synthesis of the compounds of the invention in the processes defined below, or during the synthesis of certain starting materials, it may be desirable to protect certain substituent groups to prevent their undesired reaction. The skilled chemist will appreciate when such protection is required, and how such protecting groups may be put in place, and later removed.

For examples of protecting groups see one of the many general texts on the subject, for example, Protective Groups in Organic Synthesis' by Theodora Green (publisher: John Wiley & Sons). Protecting groups may be removed by any convenient method described in the literature or known to the skilled chemist as appropriate for the removal of the protecting group in question, such methods being chosen so as to effect removal of the protecting group with the minimum disturbance of groups elsewhere in the molecule.

Thus, if reactants include, for example, groups such as amino, carboxy or hydroxy it may be desirable to protect the group in some of the reactions mentioned herein.

By way of example, a suitable protecting group for an amino or alkylamino group is, for example, an acyl group, for example an alkanoyl group such as acetyl, an alkoxycarbonyl group, for example a methoxycarbonyl, ethoxycarbonyl or t-butoxycarbonyl group, an arylmethoxycarbonyl group, for example benzyloxycarbonyl, or an aroyl group, for example benzoyl. The deprotection conditions for the above protecting groups necessarily vary with the choice of protecting group. Thus, for example, an acyl group such as an alkanoyl or alkoxycarbonyl group or an aroyl group may be removed by, for example, hydrolysis with a suitable base such as an alkali metal hydroxide, for example lithium or sodium hydroxide. Alternatively an acyl group such as a tert-butoxycarbonyl group may be removed, for example, by treatment with a suitable acid as hydrochloric, sulfuric or phosphoric acid or trifluoroacetic acid and an arylmethoxycarbonyl group such as a benzyloxycarbonyl group may be removed, for example, by hydrogenation over a catalyst such as palladium-on-carbon, or by treatment with a Lewis acid for example BF₃.OEt₂. A suitable alternative protecting group for a primary amino group is, for example, a phthaloyl group which may be removed by treatment with an alkylamine, for example dimethylaminopropylamine, or with hydrazine.

Also disclosed is a method of synthesising a compound of the formula I, the method comprising:
reacting a compound of formula A: 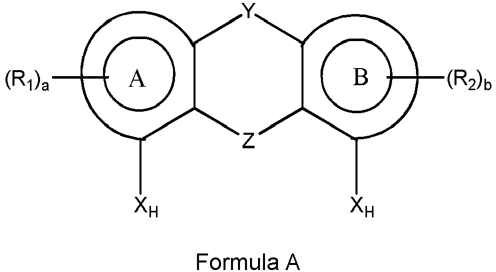 (wherein R₁, R₂, Z, Y and integers a and b each have any one of the meanings set out hereinbefore and X_{H} is a halogen);
with an organolithium (e.g. *n*-BuLi, sec-BuLi, *tert*-BuLi, LDA etc) and one compound of the formula B or C;

LG-Q LG-W Formula B Formula C

(wherein each of Q and W have any one of the meanings set out hereinbefore and LG is a suitable leaving group e.g. halo);
and then, optionally, purifying the product by methods known in the art before repeating the steps of reacting the product with:
   - an organolithium;
   - followed by the other compound of formula B or C; and
optionally thereafter, and if necessary:
   (i) removing any protecting groups present;
   (ii) converting the compound formula I into another compound of formula I; and/or
   (iii) forming a salt thereof.

Suitably, the reaction between the compound of formula A and the organolithium takes place in the presence of a suitable solvent. Any suitable anhydrous solvent or solvent mixture may be used for this reaction. A non-limiting list of suitable anhydrous solvents includes THF, dimethoxyethane, Et₂O, pentane, hexane, heptane, fluorobenzene, toluene and benzene.

Suitably, the reactions between the compound of formula A, the organolithium and the compounds of formulae B and C proceeds under cryogenic conditions. More suitably, the reaction proceeds at temperatures between 0 and -100°C. Most suitably, the reaction proceeds at temperatures between -20°C and -80°C.

A person skilled in the art will also be able to select appropriate reaction conditions (e.g. temperature, pressures, reaction times, concentrations etc.) to use in order to facilitate this reaction.

The resultant compound of formula I can be isolated and purified using techniques well known in the art. Suitably, the compounds of the present invention are purified by crystallisation.

The compounds of formula A can be prepared by processes well known in the art.

An example of a suitable procedure for the preparation of the compound of Formula I via an intermediate of formula A is shown in Scheme 1 below.

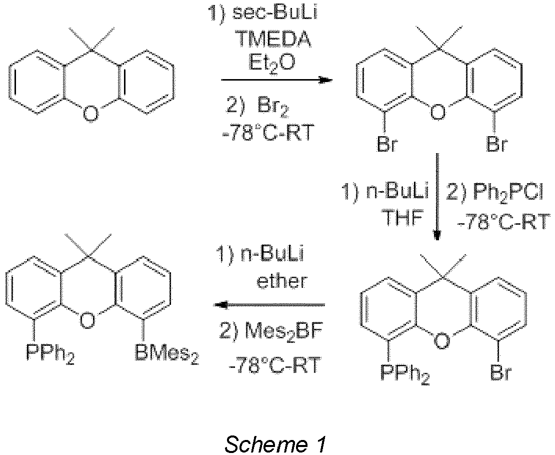

### Applications

In one aspect, the present invention provides the use of compounds of formula (Ib) of the invention, as defined herein, or a composition of the invention, as defined herein, in the activation of small molecules. Suitably, the present invention provides the use of compounds of formula (Ib) of the invention, as defined herein, or a composition of the invention, as defined herein, in the activation of H₂, CO₂, NO, CO, SO₂, N₂O, a (2-6C)alkyne, PhCCH or a (2-4C)alkene. More suitably, the present invention provides the use of compounds of formula (Ib) of the invention, as defined herein, or a composition of the invention, as defined herein, in the activation of H₂, CO₂ or N₂O

In another aspect, the present invention provides the use of compounds of formula (Ib) of the invention, as defined herein, or a composition of the invention, as defined herein, in catalysis. Suitably, the present invention provides the use of compounds of formula (Ib) of the invention, as defined herein, or a composition of the invention, as defined herein, in hydrogenation, hydroamination, hydroboration, hydrosilylation or CO₂ reduction. More suitably, the present invention provides the use of compounds of formula (Ib) of the invention, as defined herein, or a composition of the invention, as defined herein, in hydrogenation or hydroboration. Most suitably, the present invention provides the use of compounds of formula (Ib) of the invention, as defined herein, or a composition of the invention, as defined herein, in hydrogenation.

In another aspect, the present invention provides the use of compounds of formula (Ib) of the invention, as defined herein, or a composition of the invention, as defined herein, in the detection of small molecules. Suitably, the present invention provides the use of compounds of formula (Ib) of the invention, as defined herein, or a composition of the invention, as defined herein, in the detection of H₂, CO₂, NO, CO, SO₂, N₂O or a (2-4C)alkene. Most suitably, the present invention provides the use of compounds of formula (Ib) of the invention, as defined herein, or a composition of the invention, as defined herein, in the detection of nitrous oxide (N₂O).

The compounds of the present invention may be used in the activation of small molecules (e.g. H₂, CO₂, NO, CO, SO₂, N₂O, a (2-6C)alkyne, PhCCH or a (2-4C)alkene). In particular, the compounds of the present invention can bind to the small molecules as defined herein, to activate them for use in catalysis, or to serve as a means of detecting the presence of the small molecule.

The compounds of the present invention are unique in that they demonstrate superior reversible activation of small molecules when compared to current small molecule activators. In particular, the compounds of the present invention may display excellent room temperature reversible activation of small molecules. Further, the compounds of the present invention may display a significant change in a property (suitably an optical property that can be easily observed) upon small molecule binding (activation), which renders them particularly suitable for the detection of small molecules (e.g. N₂O).

In one embodiment, the compounds of the present invention display room temperature reversible activation of N₂O and/or H₂.

In one embodiment, the compounds of the present invention display a change in property that is amenable with detection (e.g. change in optical/ electrical properties) upon binding (activating) a small molecule. Suitably, the compounds of the present invention display a detectable change in the absorption and/or emission spectrum of said compounds upon binding (activating) a small molecule. More suitably, the compounds of the present invention display an optically detectable change upon binding (activating) a small molecule (e.g. H₂ or N₂O). Most suitably, the compounds of the present invention display a colour change upon binding (activating) a small molecule (e.g. H₂ or N₂O).

### EXAMPLES

Examples of the invention will now be described by reference to the accompanying figures, in which:
Figure 1 shows the molecular structure of example **1** (thermal ellipsoids are shown at the 50% probability level) as determined by X-ray crystallography.
Figure 2 shows molecular structure of example **2** (thermal ellipsoids are shown with 50% probability) as determined by X-ray crystallography.
Figure 3 shows a) the ³¹P NMR spectra for example **1** b) the ³¹P NMR spectra for example **2** and c) the ³¹P NMR spectra for the mixture of example **1** and example **2**, obtained 30 minutes after H₂ activation. All spectra were recorded at room temperature.
Figure 4 shows molecular structure of example **3** (thermal ellipsoids are shown with 50% probability) as determined by X-ray crystallography.
Figure 5 shows a) the ³¹P NMR spectra for example **1** at room temperature b) the ³¹P NMR spectra for example **3** at room temperature and c) the ³¹P NMR spectra at 80° for the mixture of example **1** and example **3**, obtained 12 hours after phenylacetylene activation.
Figure 6 shows the ³¹P NMR (202 MHz, C₆D₆, 298 K) assays of the equilibrium between **X1** + H₂ and **X1**-(H)₂ in C₆D₅Br solution.
Figure 7 shows the ¹H NMR spectrum of (E)-Pinacol(2-phenylethenyl)boronate.
Figure 8 shows the ¹H NMR spectrum of (E)-Pinacol(2-Propylethenyl)boronate.
Figure 9 shows the ¹H NMR spectrum of (E)-2-(2-Cyclohexenylvinyl)-4,4,5,5-tetramethyl-1,3,2-dioxaborolane.
Figure 10 shows the ¹H NMR spectrum of (Z)-2-(1,2-Diphenylvinyl)-4,4,5,5-tetramethyl-1,3,2-dioxaborolane.
Figure 11 shows the ¹H NMR spectrum of (Z)-2-(1,2-Diethylvinyl)-4,4,5,5-tetramethyl-1,3,2-dioxaborolane.
Figure 12 shows the ¹H NMR spectrum of Diphenyl(E-1-phenyl-2-methylvinyl)-1,3,2-dioxaborolane.
Figure 13 shows molecular structure of example **4** (thermal ellipsoids are shown with 50% probability) as determined by X-ray crystallography.

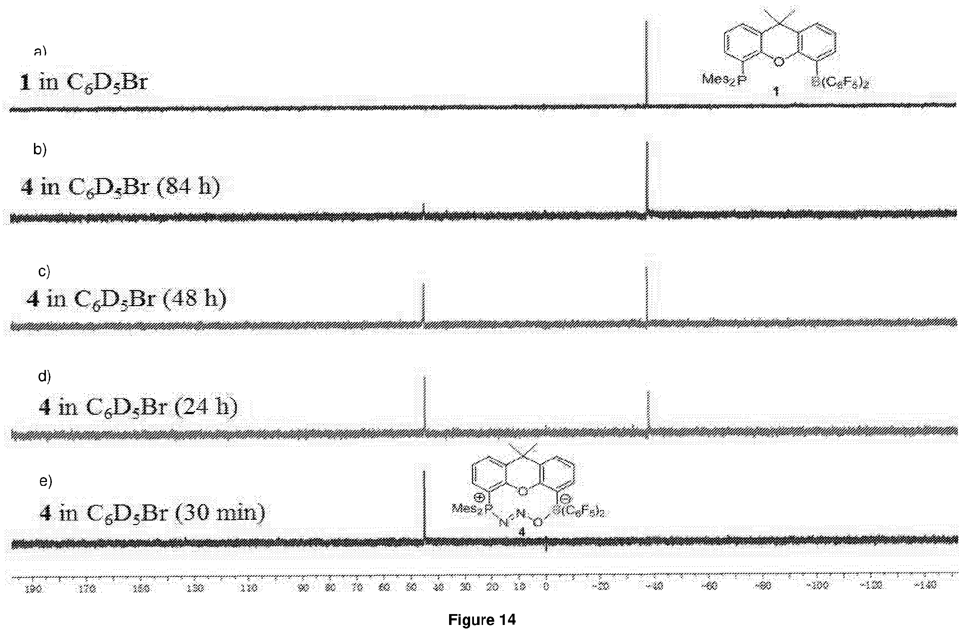

Figure 14 shows a) the ³¹P NMR spectra for example **1** b) the ³¹P NMR spectra for the mixture of example **1** and example **4**, obtained 84 hours after nitrous oxide activation c) the ³¹P NMR spectra for the mixture of example **1** and example **4**, obtained 48 hours after nitrous oxide activation d) the ³¹P NMR spectra for the mixture of example **1** and example **4**, obtained 24 hours after nitrous oxide activation and e) the ³¹P NMR spectra for the mixture of example **1** and example **4**, obtained 30 minutes after nitrous oxide activation. All spectra were recorded at room temperature.
Figure 15 displays a graph showing the change in concentration for both example **1** and example **4** over time. The concentration for example **1** is represented by the line with circle dots and example **4** is represented by the line with square dots.
Figure 16 shows the first order rate plot of the thermal loss of N₂O from example **4** at 20 °C.
The rate constant was calculated to be 6 × 10⁻³ h⁻¹.
Figure 17 shows the UV-Vis spectra of examples **1** and **4** in fluorobenzene solution. Vertical scale corresponds to absorbance (a.u.) and the horizontal scale corresponds to wavelength (nm).

### ABBREVIATIONS

- °C: degrees Celsius
- δ: shift in parts per million
- a.u.: absorbance units
- ca.: circa (about)
- DCM: dichloromethane
- DMSO: dimethyl sulfoxide
- MAO: methylaluminoxane
- MHz: mega Hertz
- NMR: nuclear magnetic resonance
- PEG: polyethylene glycol
- ppm: parts per million
- RT: room temperature
- THF: tetrahydrofuran
- TMEDA: tetramethylethylenediamine
- UV: ultraviolet
- UV-vis: ultraviolet-visible

### EXPERIMENTAL PROCEDURES AND SYNTHESES

### General experimental techniques

All manipulations were carried out using standard Schlenk line or dry-box techniques under an atmosphere of argon. Toluene and hexane were degassed by sparging with argon and dried by passing through a column of the appropriate drying agent using a commercially available Braun SPS; diethyl ether was dried by refluxing over calcium hydride, distilled and stored over potassium mirror; fluorobenzene was dried by refluxing over calcium hydride, distilled, sparged and stored over activated molecular sieves. C₆D₅Br and CD₂Cl₂ were stored over molecular sieves, and all were stored under argon in Teflon valve ampoules. NMR samples were prepared under argon in 5 mm Wilmad 507-PP tubes fitted with J. Young Teflon valves. ¹H, ¹¹B, ¹⁹F, ³¹P and ¹³C NMR spectra were recorded on Bruker AVII-400 and AVII-500 spectrometers. Chemical shifts are reported in ppm, referenced to the residual protons of the deuterated solvents for proton chemical shifts, the ¹³C of deuterated solvents for carbon chemical shifts, the ³¹P of H₃PO₄ (85%) for phosphorus chemical shifts, ¹⁹F of CF₃COOH for fluorine chemical shifts and 11B of Et₂O.BF₃ for boron chemical shifts. Elemental analyses were carried out by Stephen Boyer at London Metropolitan University and by Elemental Microanalysis Ltd., Devon.

### Preparation of 4-dimesitylphosphoryl-5-bromo-9,9-dimethylxanthene

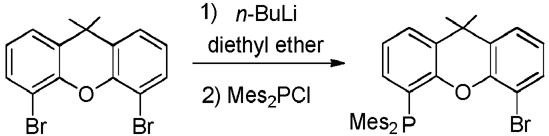

*n*-BuLi (3.1 mL of a 1.6 M solution in hexanes, 4.9 mmol) was added dropwise to a suspension of 4,5-dibromo-9,9-dimethylxanthene (4.9 g, 4.9 mmol) in diethyl ether (30 mL) at -78°C. The resulting mixture was stirred at -78°C for a further 3 h. A solution of Mes₂PCl (4.4 g, 4.9 mmol) in diethyl ether (20 mL) was then added dropwise at -78 °C. After warming to room temperature and stirred for a further 12 h, volatiles were removed *in vacuo* and the residue was washed with hexane (3 × 50 mL) to give white solid in 79% yield.

¹H NMR (400 MHz, CDCl₃, 20 °C): δ 7.25-7.23 (3H), 6.86-6.79 (2H), 6.72 (s, 4H), 6.69-6.66 (m, 1H), 2.17 (s, 6H, p-CH₃ of Mes), 2.12 (s, 12H, o-CH₃ of Mes), 1.55 (s, 6H, C(CH₃)₂).

¹³C NMR (100 MHz, CDCl₃, 20 °C): δ 152.0, 147.3, 138.0, 131.7, 131.4, 129.8, 129.7, 129.6, 129.4, 128.9, 126.7, 125.4, 124.8, 123.7, 111.0, 34.76, 32.36, 22.73, 22.57, 20.97.

³¹P NMR (162 MHz, CDCl₃, 20 °C): δ -33.97.

### Preparation of Example 1

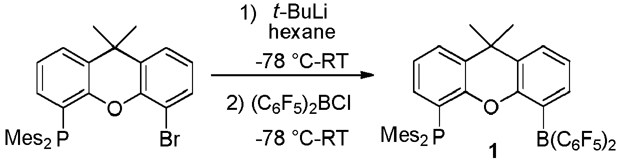

*t*-BuLi (0.53 mL of a 1.9 M solution in hexanes, 1.0 mmol) was added to a suspension of 4-dimesityl-phosphoryl-5-bromo -9,9-dimethylxanthene (557 mg, 1.0 mmol) in hexane (20 mL) at -78°C. The resulting mixture was warmed to room temperature and stirred for a further 2 h. A solution of (C₆F₅)₂BCl (390 mg, 1.0 mmol) in hexane (10 mL) was then added dropwise at -78 °C. The colour of the suspension changed immediately to yellow. The reaction mixture was allowed to warm to room temperature and stirred for a further 12 h. The white precipitate was removed by filtration, and the resulting yellow solution was concentrated and cooled to -40 °C to yield yellow crystals (370 mg, 45%).

¹H NMR (400 MHz, CD₂Cl₂, 20 °C): δ 7.62 (dd, J_{HH} = 8.0 Hz, J_{HH} = 1.6 Hz, 1H), 7.33 (d, J_{HH} = 8.0 Hz, 1H), 7.07 (t, J_{HH} = 7.6 Hz, 1H), 6.99-6.97 (m, 1H), 6.83 (t, J_{HH} = 7.6 Hz, 1H), 6.73-6.69 (m, 1H), 6.63 (d, J_{HH} = 2.1 Hz, 4H), 2.13 (s, 6H, p-CH₃ of Mes), 1.80 (s, 12H, o-CH₃ of Mes), 1.58 (s, 6H, C(CH₃)₂).

¹³C NMR (100 MHz, CD₂Cl₂, 20 °C): δ 156.4, 154.4, 149.2, 147.3, 142.2, 142.05, 137.9, 133.9, 132.2, 131.4, 131.2, 130.9, 130.8, 130.7, 129.8, 129.7, 125.4, 123.5, 123.3, 34.75, 29.17, 21.94, 21.81, 20.47.

¹¹B NMR (128 MHz, CD₂Cl₂, 20 °C): δ 64.4 (br).

³¹P NMR (162 MHz, CD₂Cl₂, 20 °C): δ -37.96.

¹⁹F NMR (377 MHz, CD₂Cl₂, 20 °C): δ -128.3 (d, 4F, J_{FF} = 19.2 Hz, ortho-CF of C₆F₅), -147.3 (t, 2F, J_{FF} = 20.7 Hz, para-CF of C₆F₅), -167.4 (m, 4F, meta-CF of C₆F₅).

Elemental microanalysis: calc. for C₄₅H₃₄BF₁₀OP, C 65.71% H 4.17%, meas. C 65.47 % H 3.61%.

Crystallographic data for example **1**: C₄₅H₃₄BF₁₀OP, Mr = 822.53, triclinic, P -*1*, *a* = 10.6337(2), *b* = 13.4784(3), *c* = 14.6502(3) Å, β = 104.2042(10)°, V = 1921.59(7) Å3, Z = 2, *ρ_{c}* = 1.421 Mg m⁻³, T = 150 K, A = 0.71073 Å. 8736 independent reflns [R(int) = 0.000] used in all calcns. R₁ = 0.0741, wR₂ = 0.1355 for observed unique reflns [I>2σ(I)] and R₁ = 0.0464, wR₂ = 0.1066 for all unique reflns. Max./min. residual electron densities 0.49 and -0.41 e Å³.

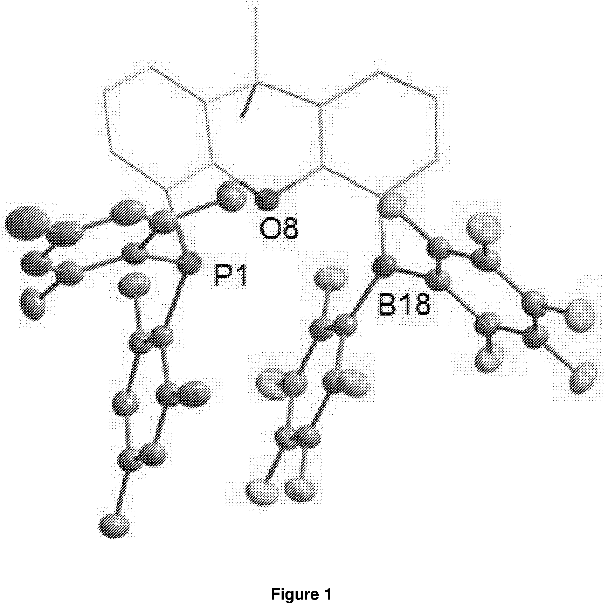

Figure 1 shows the molecular structure of example **1** (thermal ellipsoids are shown at the 50% probability level) as determined by X-ray crystallography.

### Preparation of Example X1 (Example X1 is not claimed)

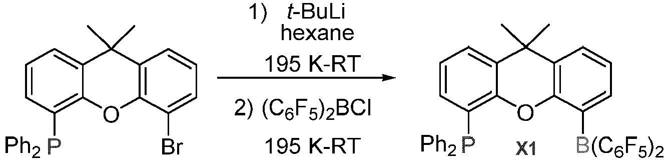

*t*-BuLi (0.53 mL of a 1.9 M solution in hexane, 1.0 mmol) was added to a suspension of 4-diphenylphosphoryl-5-bromo-9,9- dimethylxanthene (472 mg, 1.0 mmol) in hexane (20 mL) at 195 K. The resulting mixture was warmed to room temperature and stirred for a further 2 h. A solution of (C₆F₅)₂BCl (380 mg, 1.0 mmol) in hexane (10 mL) was then added dropwise at 195 K. After warming to room temperature and stirring for a further 12 h, the white precipitate was removed by filtration. The resulting yellow solution was concentrated and cooled to 233 K to yield yellow crystals of **X1** (413 mg) in 56% yield.

¹H NMR (500 MHz, C₆D₆, 298 K): δ 7.09 (d, *J*_{HH} = 6.0 Hz, 1H, Ar*H*), 6.95-6.93 (m, 5H, Ar*H*), 6.82 (t, *J*_{HH} = 6.8 Hz, 2H, Ar*H*), 6.70-6.75 (m, 5H, ArH), 6.69 (t, *J*_{HH} = 6.0 Hz, ¹H, Ar*H*), 6.47 (t, *J*_{HH} = 6.0 Hz, ¹H, Ar*H*), 6.44-6.40 (m, ¹H, Ar*H*), 1.17 (s, 6H, C(C*H*₃)₂).

¹³C NMR (125 MHz, C₆D₆, 298 K): δ 154.8 (Ar), 151.5 (d, *J*_{PC} = 16.2 Hz, Ar), 147.6 (dm, *J*_{C-F}= 250 Hz, *C*₆F₅), 143.2 (dm, *J*_{C-F}= 250 Hz, *C*₆F₅), 135.8 (d, *J*_{PC} = 11.6 Hz, Ar), 134.1 (Ar), 132.6 (d, *J*_{PC} = 20.0 Hz, Ar), 131.3 (d, *J*_{PC} = 10.0 Hz, Ar), 129.3, 129.2, 127.7 (all Ar), 127.6 (d, *J*_{PC} = 6.8 Hz, Ar), 127.1, 127.0, 126.8, 125.7, 123.3, 122.4 (all Ar), 33.3 (C(CH₃)₂), 29.9 (*C*H₃).

¹¹B NMR (160 MHz, C₆D₆, 298 K): δ 58.2 (br).

³¹P NMR (202 MHz, C₆D₆, 298 K): δ -15.5.

¹⁹F NMR (471 MHz, C₆D₆, 298 K): δ -128.2 (d, 4F, *J*_{FF} = 18.5 Hz, ortho-CF of C₆F₅), -146.9 (t, 2F, *J*_{FF} = 17.0 Hz, para-CF of C₆F₅), -161.9 (m, 4F, meta-CF of C₆F₅).

Elemental microanalysis: calc. for C₃₉H₂₂BF₁₀OP + C₆H₁₄, C 65.55% H 4.40%, meas. C 65.24 % H 4.12%.

### Preparation of example X2 (Example X2 is not claimed)

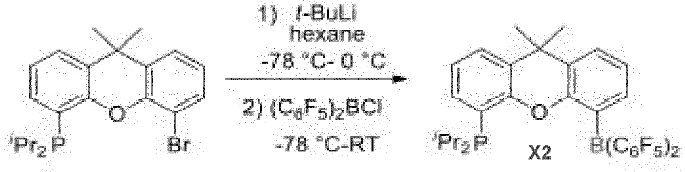

*t*-BuLi (0.53 mL of a 1.9 M solution in hexanes, 1.0 mmol) was added to a suspension of 4-diisopropylphosphoryl- 5-bromo- 9,9-dimethylxanthene (405 mg, 1.0 mmol) in hexane (20 mL) at -78°C. The resulting mixture was warmed to 0 °C and stirred for a further 2 h. A solution of (C₆F₅)₂BCl (380 mg, 1.0 mmol) in hexane (10 mL) was then added dropwise at -78 °C. The colour of the suspension changed to yellow slowly. The mixture was allowed to warm to room temperature and stirred for a further 12 h. The white precipitate was removed by filtration. The resulting yellow solution was concentrated and cooled to -40 °C to yield yellow crystals of **X2** (328 mg, 49%).

¹H NMR (400 MHz, CD₂Cl₂, 25 °C): δ 7.67 (d, *J*_{HH} = 7.6 Hz, 1H, ArH), 7.35 (d, *J*_{HH} = 7.6 Hz, 1H, Ar*H*), 7.15 (d, *J*_{HH} = 8.0 Hz, 1H, Ar*H*), 7.08-7.05 (m, 2H, Ar*H*), 7.01 (t, *J*_{HH} = 7.6 Hz, 1H, Ar*H*), 1.81 (m, 2H, C*H*), 1.57 (s, 6H, C(C*H*₃)₂), 0.82 (dd, *J*_{HH} = 6.8 Hz, *J*_{HP} = 14.8 Hz, 6H, CH(C*H*₃)₂), 0.66 (dd, *J*_{HH} = 7.2 Hz, *J*_{HP} = 11.2 Hz, 6H, CH(C*H*₃)₂).

¹³C NMR (125 MHz, C₆D₆, 25 °C): δ 154.9, 152.6 (d, *J*_{PC} = 18.0 Hz), 147.5 (dm, *J*_{C-F}= 256 Hz), 143.1 (dm, *J*_{C-F} = 256 Hz), 137.1 (dm, *J*_{C-F}= 250 Hz), 135.6, 132.4, 130.5, 129.1, 125.5, 122.3 (d, *J*_{PC} = 10.0 Hz), 33.22, 30.60, 22.26 (d, *J*_{PC} = 14.4 Hz), 18.73, 18.58, 17.32, 17.24.

¹¹B NMR (128 MHz, CD₂Cl₂, 25 °C): δ 65.0 (br).

³¹P NMR (162 MHz, CD₂Cl₂, 25 °C): δ -9.91.

¹⁹F NMR (377 MHz, CD₂Cl₂, 25 °C): δ -129.3 (d, 4F, *J*_{FF} = 25.2 Hz, ortho-CF of C₆F₅), -149.8 (t, 2F, *J*_{FF} = 18.8 Hz, para-CF of C₆F₅), -163.2 (m, 4F, meta-CF of C₆F₅).

Elemental microanalysis: calc. for C₃₃H₂₆BF₁₀OP, C 59.13% H 3.91%, meas. C 59.19 % H 3.61%.

### SMALL MOLECULE ACTIVATION

### Activation of hydrogen

### Preparation of example 2

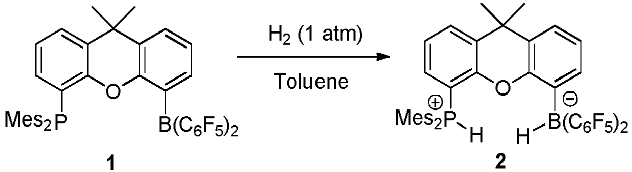

Example (compound) 1 (82 mg, 0.10 mmol) was dissolved in toluene (5 mL) and the resulting solution subjected to three freeze-pump-thaw cycles before backfilling with H₂ (ca. 1 atm). The solution was allowed to stand at room temperature for 2 d to yield colourless crystals, which were separated by filtration, washed with pentane (3 × 5 mL) and dried *in vacuo* to afford **2** as an colourless powder (65 mg, 79%).

¹H NMR (500 MHz, CD₂Cl₂, 20 °C): δ 9.83 (d, J_{PH} = 526 Hz, 1H), 7.91 (d, J_{HH} = 8.0 Hz, 1H), 7.27-7.25 (m, 2H), 7.10-7.06 (m, 1H), 7.03-6.99 (m, 5H), 6.89 (d, J_{HH} = 7.0 Hz, 1H), 3.98 (q, J_{BH} = 94 Hz, 1H), 2.38 (s, 6H, p-CH₃ of Mes), 2.18 (s, 12H, o-CH₃ of Mes), 1.71 (s, 6H, C(CH₃)₂).

¹³C NMR (126 MHz, CD₂Cl₂, 20 °C): δ 156.9, 154.7, 147.7, 145.7, 143.1, 135.4, 133.4, 132.7, 131.5, 131.4, 131.4, 131.3, 127.9, 124.4 (J_{PC} = 13.9 Hz), 123.8, 120.7, 111.5 (J_{PC} = 88 Hz), 104.2 (J_{PC} = 88 Hz), 35.1, 29.2, 21.4, 21.3, 21.0.

¹¹B NMR(128 MHz, CD₂Cl₂, 20 °C): δ 64.4 (d, J_{BH} = 94 Hz).

³¹P NMR (162 MHz, CD₂Cl₂, 20 °C): δ -21.52 (d, J_{PH} = 526 Hz).

¹⁹F NMR (377 MHz, CD₂Cl₂, 20 °C): δ -131.9 (d, 4F, J = 19.3 Hz, ortho-CF of C₆F₅), -163.1 (t, 2F, J = 20.7 Hz, para-CF of C₆F₅), -165.7 (m, 4F, meta-CF of C₆F₅).

Crystallographic data of example **2**: C₄₅H₃₆BF₁₀OP, *M*ᵣ = 824.54, orthorhombic, *P c n b*, *a* = 18.0706(2), *b* = 20.3168(3), *c* = 21.2135(3) Å, *V* = 7788.26(18) Å³, Z = 4, *ρ*_{c} = 1.406 Mg m⁻³, *T* = 150 K, λ = 0.71073 Å. 8858 independent reflns [R(int) = 0.000] used in all calcns. *R*₁ = 0.0888, w*R*₂ = 0.1185 for observed unique reflns [/>2σ(I)] and *R*₁ = 0.0483, w*R*₂ = 0.0861 for all unique reflns. Max./min. residual electron densities 0.0861 and -0.68 e Å³.

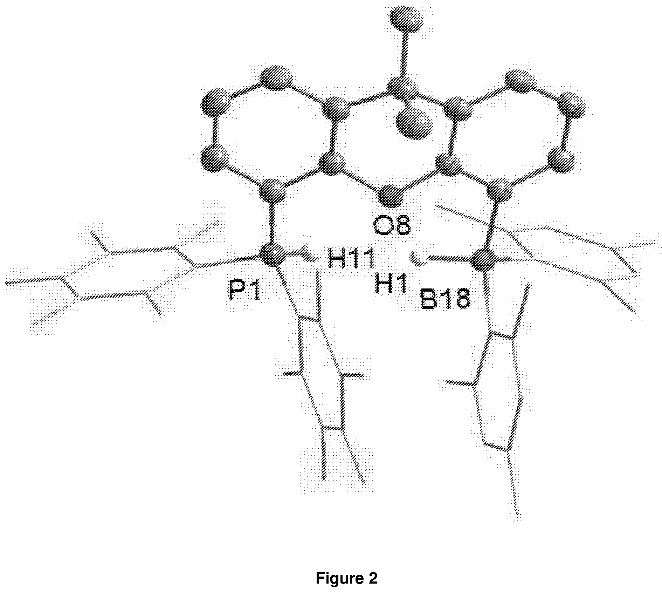

The binding (activation) of hydrogen by example **1** is demonstrated in Figure 2, which shows the molecular structure of example **2** (thermal ellipsoids are shown with 50% probability) as determined by X-ray crystallography.

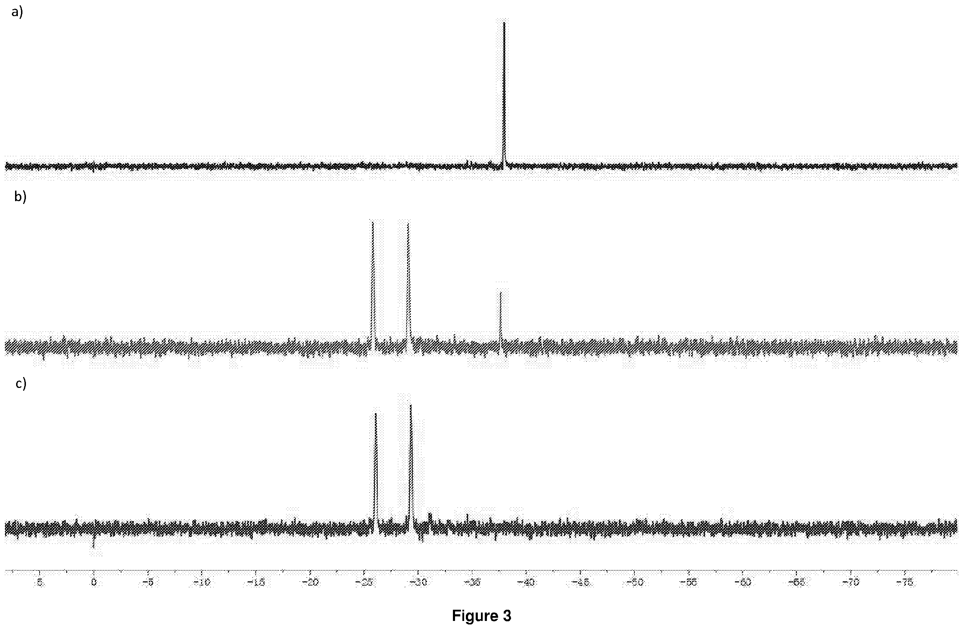

The binding (activation) of hydrogen by example **1** was shown to be reversible at room temperature. Figure 3 shows a) the ³¹P NMR spectra for example **1** b) the ³¹P NMR spectra for example 2 and c) the ³¹P NMR spectra for the mixture of example **1** and example **2**, obtained 30 minutes after reaction with H₂. All spectra were recorded at room temperature.

The ratio of example **1**:example **2** 30 minutes after reaction with H₂ was found to be approximately 7:1.

The binding (activation) of hydrogen by example 1, to form example 2, resulted in a colour change from yellow to colourless.

### Activation of phenylacetylene

### Preparation of example 3

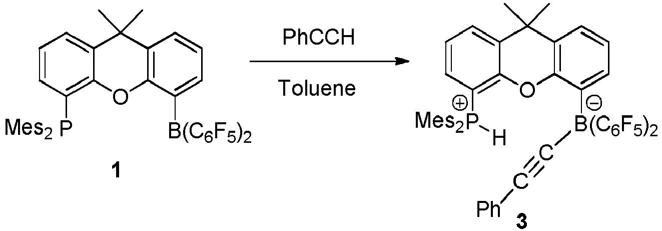

Example (compound) **1** (82 mg, 0.10 mmol) was dissolved in toluene (5 mL). PhCCH (10 mg, 0.10 mmol) was added to the solution, and the solution allowed to stand at room temperature for 2 d to yield colourless solid, which was separated by filtration, washed with pentane (3 × 5 mL) and dried *in vacuo* to afford **3** as an colourless powder (70 mg, 76%). Single crystals suitable for X-ray crystallography were grown from a solution in hexane and fluorobenzene.

¹H NMR (400 MHz, CD₂Cl₂, 20 °C): δ 10.10 (d, J_{PH} = 528 Hz, 1H), 7.79 (d, J_{H}H = 7.8 Hz, 1H), 7.18-7.14 (m, 2H), 7.10-7.08 (m, 3H), 7.03 (dt, J_{HH} = 8.0 Hz, J_{HH} = 1.2 Hz, 1H), 6.91-6.82 (m, 4H), 6.80 (br, 4H), 2.24 (s, 6H, p-CH₃ of Mes), 1.81 (br, 12H, o-CH₃ of Mes), 1.65 (br, 6H, C(CH₃)₂).

¹¹B NMR(128 MHz, CD₂Cl₂, 20 °C): δ -18.1 (s).

³¹P NMR (162 MHz, CD₂Cl₂, 20 °C): δ -25.85 (d, J_{PH} = 528 Hz).

Crystallographic data of **3**·0.5C₆H₅F: C₅₆H_{42.50}B₁F_{10.50}O₁P₁, *M*ᵣ = 972.72, monoclinic, *P 21*/*n*, *a* = 17.8757(2), *b* = 14.2160(2), *c* = 20.8824(3) Å, β = 100.6507(8))°, *V* = 5215.23(12) Å³, *Z* = 4, *ρ*c = 1.239 Mg m⁻³, *T* = 150 K, λ = 0.71073 Å. 11881 independent reflns [R(int) = 0.000] used in all calcns. *R*₁ = 0.0973, w*R*₂ = 0.2185 for observed unique reflns [*I*>2σ(I)] and *R*₁ = 0.0680, w*R*₂ = 0.1788 for all unique reflns. Max./min. residual electron densities 0.79 and -0.63 e Å³.

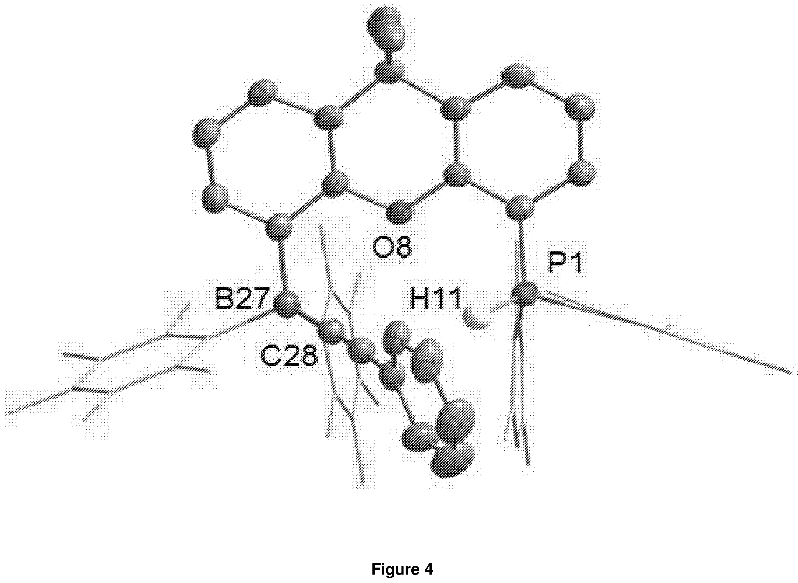

The binding (activation) of phenylacetylene by example **1** is demonstrated in Figure 4, which shows the molecular structure of example **3** (thermal ellipsoids are shown with 50% probability) as determined by X-ray crystallography.

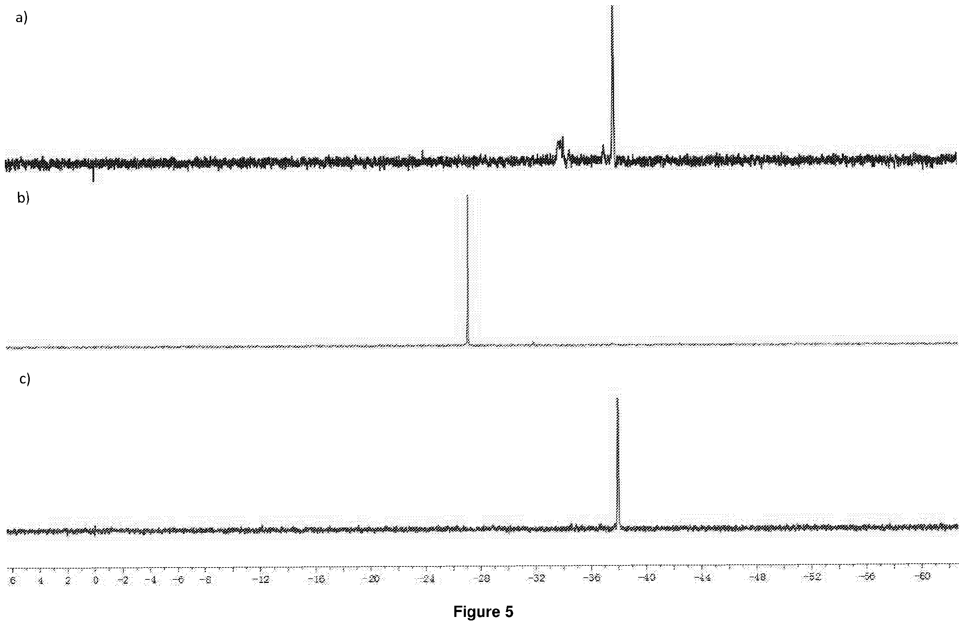

The binding (activation) of phenylacetylene by example **1** was shown to be reversible. Figure 5 shows a) the ³¹P NMR spectra for example **1** at room temperature b) the ³¹P NMR spectra for example **3** at room temperature and c) the ³¹P NMR spectra at 80° for the mixture of example **1** and example **3**, obtained 12 hours after reaction with phenylactylene.

### NMR studies of the equilibrium between X1 + H₂ and X1-(H)₂ in C₆D₅Br solution

A J Youngs NMR tube was charged with X1 (15.0 mg, 0.020 mmol) and C₆D₅Br forming a 0.050 M solution. The resulting solution was subjected to three freeze-pump-thaw cycles before backfilling with H₂ (ca. 4 atm). The sample was inserted into a NMR spectrometer pre-heated to the target temperature and allowed to reach thermal equilibrium over 30 min before the start of data acquisition. The response of the solution to temperature was followed by ¹H, ¹¹B, ¹⁹F and ³¹P NMR spectroscopy.

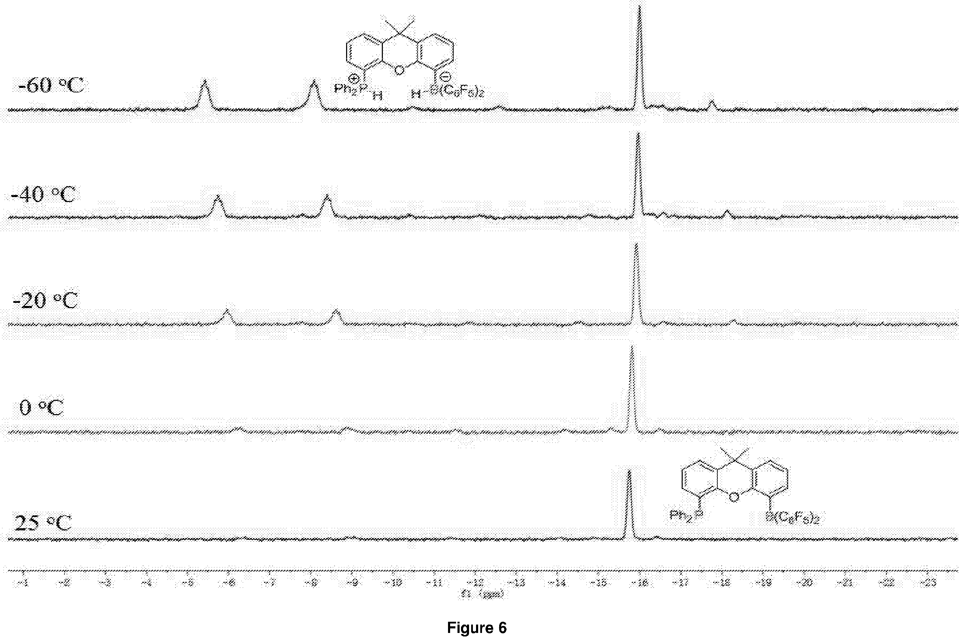

Figure 6 shows the ³¹P NMR (202 MHz, C₆D₆, 298 K) assays of the equilibrium between **X1** + H₂ and **X1**-(H)₂ in C₆D₅Br solution.

### HYDROBORATION

The catalytic performance of Examples **1** and **X1** in the hydroboration of PhCCH with HBpin (pin = OCMe₂CMe₂O) was next determined. The conditions used and yields of the corresponding alkenyl boronates are displayed in Table 1 below.

**Table 1: Catalytic performance of 1 and X1 in the hydroboration of PhCCH with HBpin (pin = OCMe₂CMe₂O).^{a}**

| | | | | |
|---|---|---|---|---|
| 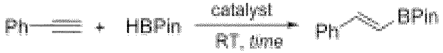 | | | | |

| Entry | Catalyst | Catalyst Loading | Time | yield(%) |
|---|---|---|---|---|
| 1 | - | | 12 h | 0 |
| 2 | 1 | 5 mol% | 12 h | 26 |
| 3 | **X1** | 5 mol% | 12 h | 100 |
| 4 | **X1** | 1 mol% | 12 h | 100 |

| | | | | |
|---|---|---|---|---|
| *^{a}* Conditions: PhCCH (0.5 mmol) and HBpin (0.5 mmol) at room temperature in CD₂Cl₂. | | | | |

Next the catalytic performance of Example **X1** in the hydroboration of other alkynes with HBpin (pin = OCMe₂CMe₂O) was determined using the general procedure below.

### General procedure for the catalytic hydroboration of alkynes with HBpin

In a glovebox, a J. Young's NMR tube was charged with **X1** (0.005 mmol), alkynes (0.5 mmol), HBpin (0.5 mmol) and 0.4 mL CD₂Cl₂. The resulting reaction mixture was monitored by ¹H NMR and ¹¹B NMR spectroscopy.

Table 2 displays the yields of the alkenyl boronates from each of the catalytic hydroboration reactions.

**Table 2. Hydroboration of alkynes with Catalyst X1 ^{a}**

| Entry | Alkynes | Product | Yield |
|---|---|---|---|
| 1 | 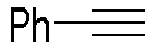 | 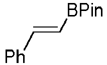 | 100 |
| 2 | 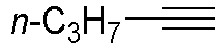 | 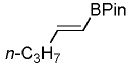 | 100 |
| 3*^{b}* | 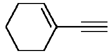 | 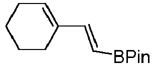 | 75 |
| 4 | 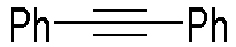 | 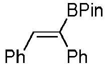 | 100 |
| 5 | 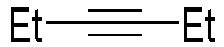 | 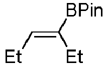 | 100 |
| 6 | 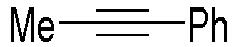 | 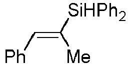 | 100 |

| | | | |
|---|---|---|---|
| *^{a}* Alkynes (0.5 mmol) and HBpin (0.5 mmol) with 1 mol% X1 at room temperature in 0.4 mL CD₂Cl₂ for 12 hours. *^{b}* 48 hours. | | | |

### Characterisation data for the alkenyl boronate products

### (E)-Pinacol(2-phenylethenyl)boronate

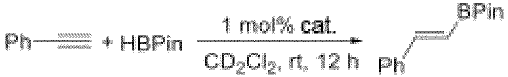

The reaction was carried out according to the general procedure above by using phenylacetylene (61 mg, 0.5 mmol) and HBpin (64 mg, 0.5 mmol). Purification by silica gel chromatography (n-hexane/diethyl ether (10:1) as eluent) afforded the title compound as a colorless oil (118 mg, 93% yield). ¹H NMR (400 MHz, CDCl₃, 25°C): δ 7.41 (d, *J*_{HH} = 6.8 MHz, 1H), 7.31-7.21 (m, 4H), 6.10 (d, *J* = 18.4 Hz, CHB), 1.24 (s, CH3). ¹³C NMR (100 MHz, CDCl₃, 25°C): δ 148.5, 136.5, 127.9, 127.5, 126.0, 82.33, 23.79. ¹¹B NMR (128 MHz, CDCl₃, 25°C): 30.1 ppm. Organic product is a known compound: Tucker, C. E.; Davidson, J.; Knochel, P. J. Org. Chem. 1992, 57, 3482.

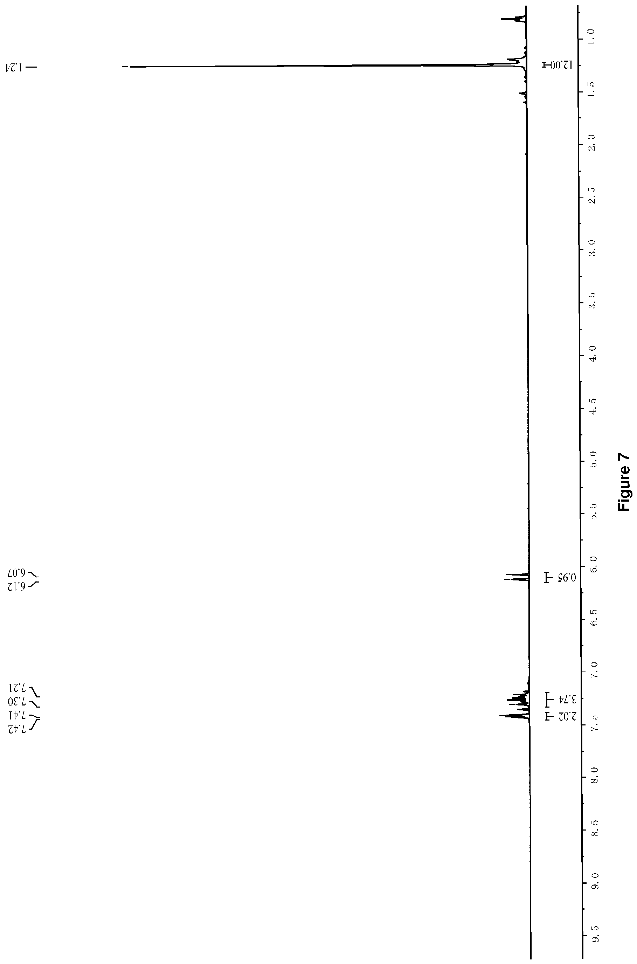

Figure 7 shows the ¹H NMR spectrum of (E)-Pinacol(2-phenylethenyl)boronate.

### (E)-Pinacol(2-Propylethenyl)boronate

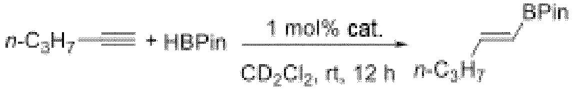

The reaction was carried out according to the general procedure above by using 1-pentyne (34 mg, 0.5 mmol) and HBpin (64 mg, 0.5 mmol). The resulting reaction mixture was monitored by ¹H NMR and ¹¹B NMR spectroscopy. After 12 hours, all the 1-pentyne was consumed. ¹H NMR (400 MHz, CD₂Cl₂, 25°C): δ 6.49 (dt, *J*_{HH} = 17.6 MHz, *J*_{HH} = 6.8 MHz, C*H*CH₂), 5.30 (d, *J*_{HH} = 18.0 MHz, CHB), 2.03 (q, *J* = 7.2 Hz, C*H*₂CH), 1.35 (m, C*H*₂CH₂), 1.14 (s, C*H*₃C), 0.82 (t, *J* = 7.2 Hz, C*H*₃CH₂). ¹¹B NMR (128 MHz, CD₂Cl₂, 25°C): 29.8 ppm. Organic product is a known compound: Tucker, C. E.; Davidson, J.; Knochel, P. J. Org. Chem. 1992, 57, 3482.

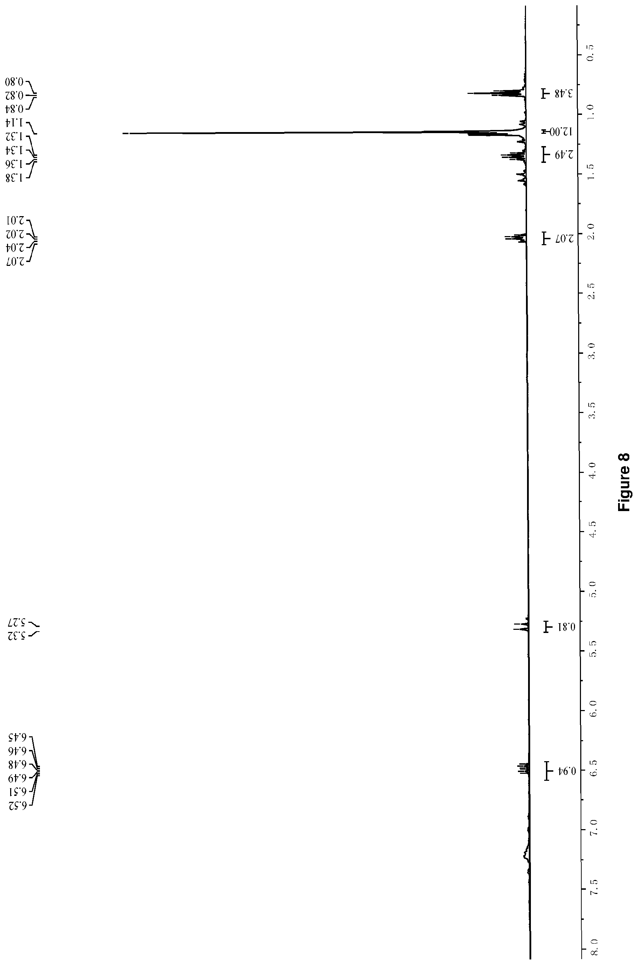

Figure 8 shows the ¹H NMR spectrum of (E)-Pinacol(2-Propylethenyl)boronate.

### (E)-2-(2-Cyclohexenylvinyl)-4,4,5,5-tetramethyl-1,3,2-dioxaborolane

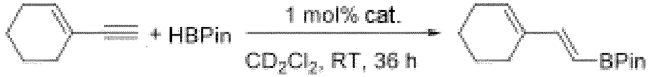

The reaction was carried out according to the general procedure above by using 1-cyclohexenyl)acetylene (53 mg, 0.5 mmol) and HBpin (64 mg, 0.5 mmol). The resulting reaction mixture was monitored by ¹H NMR and ¹1B NMR spectroscopy. After 36 hours, the yield of product is about 75%. ¹H NMR (400 MHz, CD₂Cl₂, 25°C): δ 6.87 (d, *J*_{HH} = 18.0 Hz, CH), 5.87 (t, *J =* 3.6 Hz, C*H*CH₂), 5.27 (d, *J*_{HH} = 18.0 Hz, CHB), 2.08-2.03 (m, 4H), 1.53-1.49 (m, 4H), 1.15 (s, 12H). ¹¹B NMR (160 MHz, CD₂Cl₂, 25°C): 30.2 (br) ppm. Organic product is a known compound: Ho, H. E.; Asao, N.; Yamamoto, Y.; Jin, T. Org.Lett. 2014, 16, 4670.

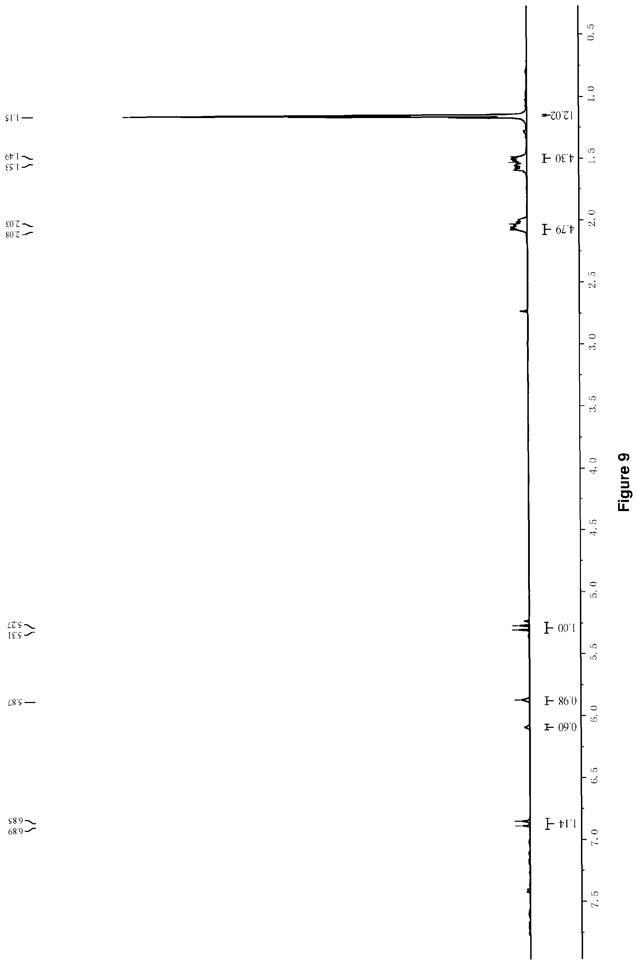

Figure 9 shows the ¹H NMR spectrum of (E)-2-(2-Cyclohexenylvinyl)-4,4,5,5-tetramethyl-1,3,2-dioxaborolane.

### (Z)-2-(1,2-Diphenylvinyl)-4,4,5,5-tetramethyl-1,3,2-dioxaborolane

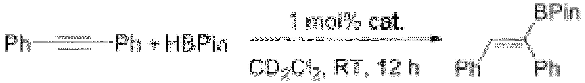

The reaction was carried out according to the general procedure above by using: diphenylsilane (89 mg, 0.5 mmol) and HBPin (64 mg, 0.5 mmol). The resulting reaction mixture was monitored by ¹H NMR and ¹¹B NMR spectroscopy. After 12 hours, the yield of product is about 100%. ¹¹B NMR (128 MHz, CD₂Cl₂, 25°C): 30.6 ppm. Organic product is a known compound: Ho, H. E.; Asao, N.; Yamamoto, Y.; Jin, T. Org.Lett. 2014, 16, 4670.

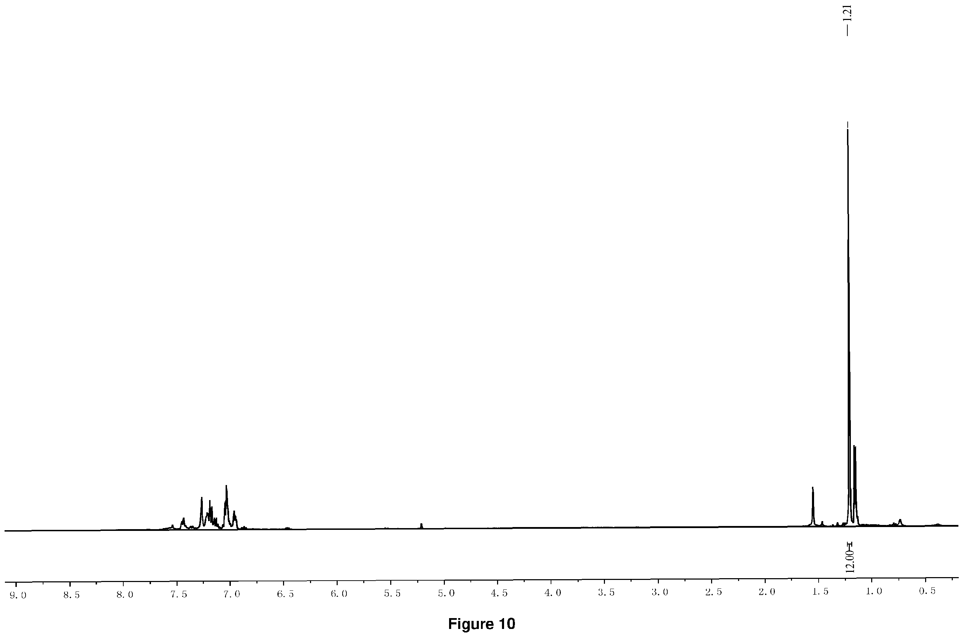

Figure 10 shows the ¹H NMR spectrum of (Z)-2-(1,2-Diphenylvinyl)-4,4,5,5-tetramethyl-1,3,2-dioxaborolane.

### (Z)-2-(1,2-Diethylvinyl)-4,4,5,5-tetramethyl-1,3,2-dioxaborolane

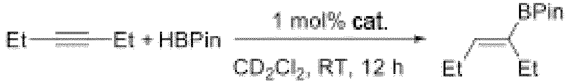

The reaction was carried out according to the general procedure above by using: 3-hexyne (41 mg, 0.5 mmol) and HBPin (64 mg, 0.5 mmol). The resulting reaction mixture was monitored by ¹H NMR and ¹¹B NMR spectroscopy. After 12 hours, the yield of product is about 100%. ¹H NMR (400 MHz, CDCl₃, 25°C): δ 6.12 (t, *J* = 6.8 Hz, C*H*CH₂), 209-2.00 (m, 4H), 0.90 (t, *J*_{HH} = 7.6 Hz, C*H*₃), 0.83 (t, *J*_{HH} = 7.6 Hz, C*H*₃). ¹¹B NMR (128 MHz, CD₂Cl₂, 25°C): 30.5 ppm. Organic product is a known compound: Greenhalgh, M. D.; Thomas, S. P. Chem. Commun., 2013, 49, 11230.

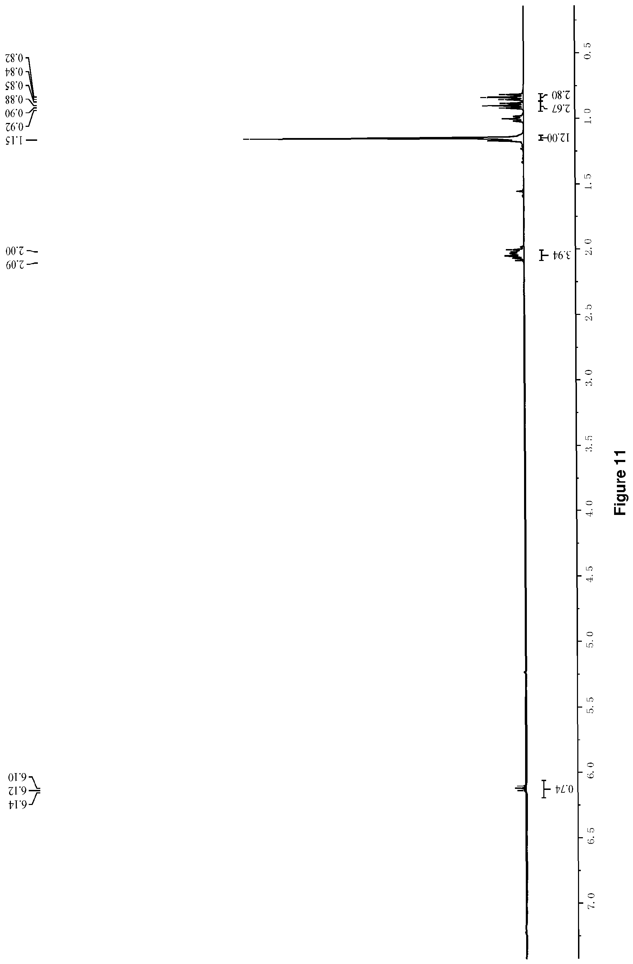

Figure 11 shows the ¹H NMR spectrum of (Z)-2-(1,2-Diethylvinyl)-4,4,5,5-tetramethyl-1,3,2-dioxaborolane.

### Diphenyl(E-1-phenyl-2-methylvinyl)-1,3,2-dioxaborolane

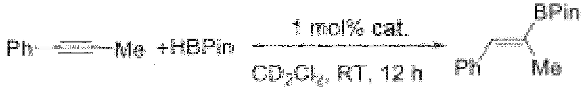

The reaction was carried out according to the typical procedure by using: 1-phenyl-1-pentyne (58 mg, 0.5 mmol) and HBPin (64 mg, 0.5 mmol). The resulting reaction mixture was monitored by ¹H NMR and ¹¹B NMR spectroscopy. After 12 hours, the yield of product is about 100%. Purification by silica gel chromatography (n-hexane/diethyl ether (10:1) as eluent) afforded a mixture of the title compound as a colorless oil (104 mg, 85% yield). ¹H NMR (400 MHz, CDCl₃, 25°C): δ 7.32-7.25 (m, 4H), 7.18-7.15 (m, 2H), 1.92 (s, C*H*₃), 1.24 (s, C(C*H*₃)₂). ¹³C NMR (100 MHz, CDCl₃, 25°C): δ 141.3, 136.9, 128.4, 127.0, 126.1, 82.49, 23.83, 14.87. ¹¹B NMR (128 MHz, CD₂Cl₂, 25°C): 30.8 ppm. Organic product is a known compound: Kalinin, A. V.; Scherer, S.; Snieckus, V. Angew. Chem. Int. Ed. 2003, 42, 3399.

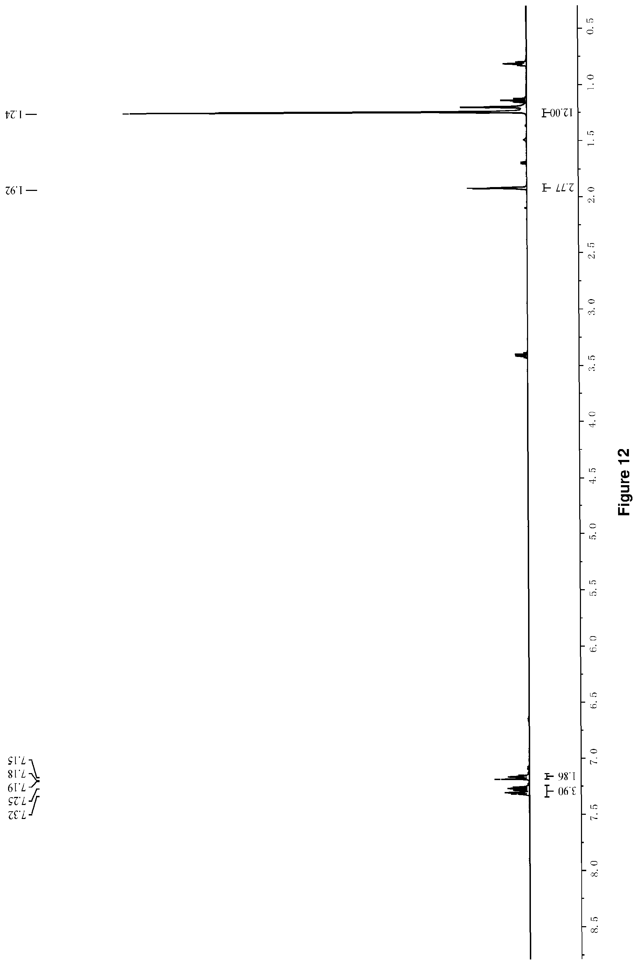

Figure 12 shows the ¹H NMR spectrum of Diphenyl(E-1-phenyl-2-methylvinyl)-1,3,2-dioxaborolane.

### NITROUS OXIDE SENSING

### Preparation of example 4

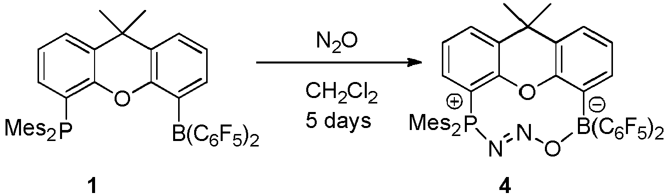

Example (compound) 1 (164 mg, 0.10 mmol) was dissolved in CH₂Cl₂ (5 mL) and the resulting solution subjected to three freeze-pump-thaw cycles before backfilling with N₂O (ca. 1 atm). The solution was allowed to stand at room temperature for 5 d and then layered with hexane to yield colourless crystals, which were separated by filtration and dried *in vacuo* (130 mg, 75 %).

¹H NMR (400 MHz, CD₂Cl₂, 20 °C): δ 7.81 (d, *J*_{HH} = 7.6 Hz, 1H), 7.30 (dd, *J*_{HH} = 8.0 Hz, *J*_{HH} = 1.6 Hz, 1H), 7.16 (dt, *J*_{HH} = 8.0 Hz, *J*_{HH} = 3.2 Hz, 1H), 7.09-7.03 (m, 2H), 6.97 (t, *J*_{HH} = 7.6 Hz, 1H), 6.94-6.86 (m, 2H), 6.74 (d, *J*_{HH} = 7.2 Hz, 1H), 6.65 (s, 1H), 2.44 (s, 3H), 2.29 (s, 3H), 2.27 (s, 3H), 1.88 (s, 3H), 1.85 (s, 3H), 1.81 (s, 3H), 1.65 (s, 3H), 1.25 (s, 3H).

¹¹B NMR (128 MHz, CD₂Cl₂, 20 °C): δ 4.3 (br).

³¹P NMR (162 MHz, CD₂Cl₂, 20 °C): δ 46.8 (s).

¹⁹F NMR (377 MHz, CD₂Cl₂, 20 °C): δ -131.30 (br, 1F), -132.14 (br, 1F), -132.71 (br, 1F), -136.94 (br, 1F), -160.50 (t, *J*_{HH} = 19.6 Hz, 1F), -161.28 (t, *J*_{HH} = 19.6 Hz,1F), - 165.15 (br, 1F), -165.84 (br, 1F), -166.33 (br, 1F), -167.99 (br, 1F).

Crystallographic data of **4**· 0.5 C₆H₁₄: C₄₈H₄₁B₁F₁₀N₂O₂P₁, *M*ᵣ = 909.63, triclinic, P - 1, *a* = 13.0174(3), *b* = 13.1393(3), c= 13.8827(3) Å, β = 112.4230(11)°, *V*= 2130.77(9) Å³, Z = 2, pc = 1.418 Mg m⁻³, *T* = 150 K, λ = 0.71073 Å. 9608 independent reflns [R(int) = 0.000] used in all calcns. *R*₁ = 0.0687, w*R*₂ = 0.1443 for observed unique reflns [/>2σ(I)] and *R*₁ = 0.0527, w*R*₂ = 0.1263 for all unique reflns. Max./min. residual electron densities 0.97 and - 0.43 e Å³.

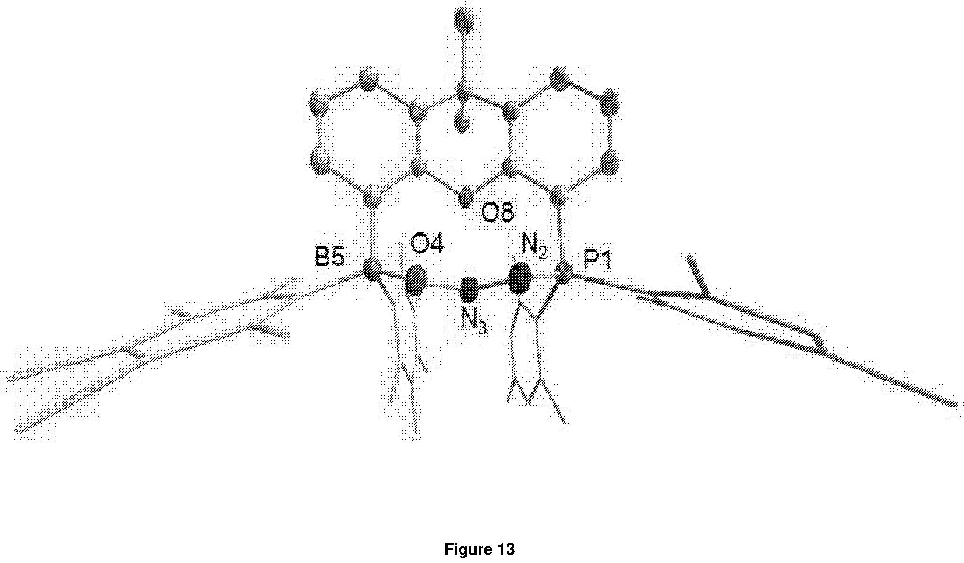

The binding of nitrous oxide by example **1** is demonstrated in Figure 13, which shows the molecular structure of example **4** (thermal ellipsoids are shown with 50% probability) as determined by X-ray crystallography.

The binding of nitrous oxide by example **1** was shown to be reversible at room temperature. Figure 14 shows a) the ³¹P NMR spectra for example **1** b) the ³¹P NMR spectra for the mixture of example 1 and example 4, obtained 84 hours after reaction with nitrous oxide c) the ³¹P NMR spectra for the mixture of example 1 and example 4, obtained 48 hours after reaction with nitrous oxide d) the ³¹P NMR spectra for the mixture of example 1 and example 4, obtained 24 hours after reaction with nitrous oxide and e) the ³¹P NMR spectra for the mixture of example 1 and example 4, obtained 30 minutes after reaction with nitrous oxide. All spectra were recorded at room temperature.

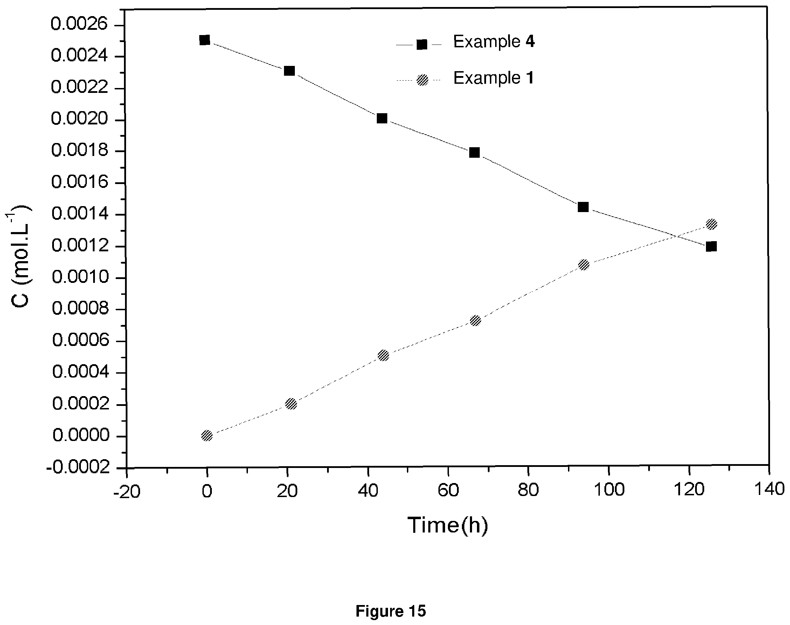

Figure 15 further evidences the reversible binding of nitrous oxide by example 1. Figure 15 displays a graph showing the change in concentration for both example 1 and example **4** over time. The concentration for example **1** is represented by the line with circle dots and example **4** is represented by the line with square dots.

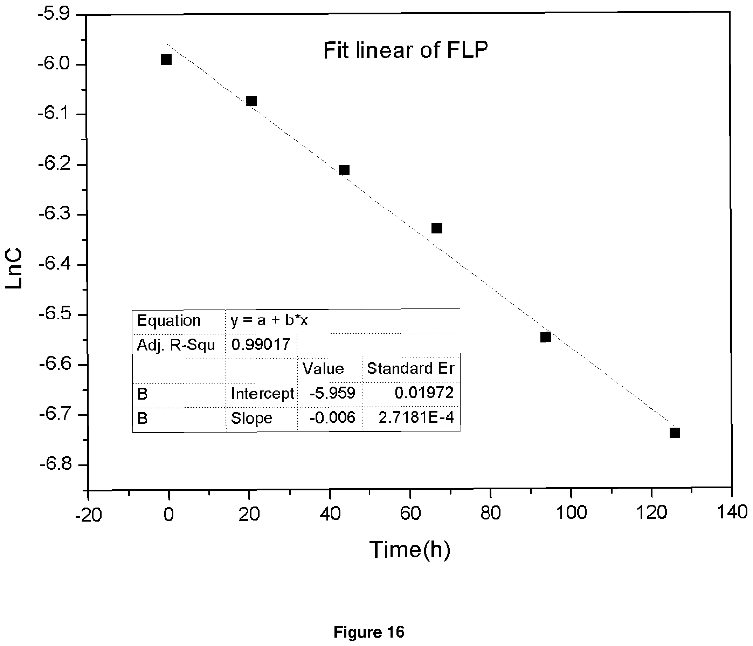

Figure 16 shows the first order rate plot of the thermal loss of N₂O from example **4** at 20 °C. The rate constant was calculated to be 6 × 10⁻³ h⁻¹.

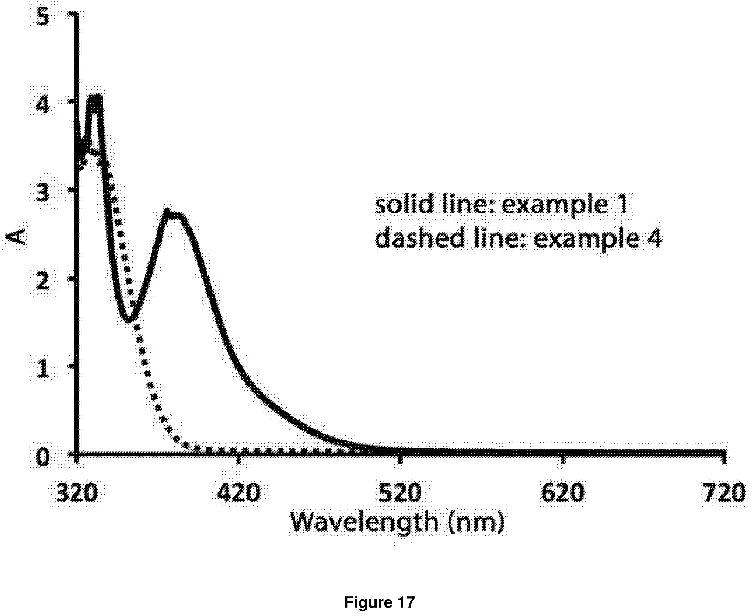

The binding of nitrous oxide by example **1**, to form example **4**, resulted in a colour change from yellow to colourless. This is evidenced in Figure 17, which shows the UV-vis spectra for both example 1 and example 4 (i.e. before N₂O binding and after N₂O binding).

This change in colour change, in conjunction with the reversible binding, makes example 1 particularly well suited for sensing nitrous oxide.

## Claims

1. A compound of formula lb, or a salt thereof: 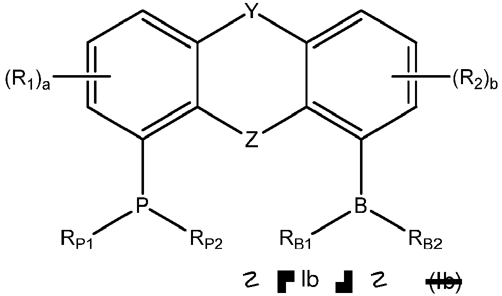 wherein:
Y is absent or selected from CRₐR_{b}, NR_{b}, O, SiR_{c}R_{d}, C=CR_{c}R_{d}, or S, wherein Rₐ and
R_{b} are independently selected from one or more groups comprising H, (1-6C)alkyl, (2-6C)alkenyl, (2-6C)alkynyl, (1-6C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, heterocyclyl-(1-2C)alkyl, cyano, nitro, hydroxy or halo, and R_{c} and R_{d} are independently selected from hydrogen, (1-4C)alkyl, (1-6C)alkoxy, aryl, aryl-(1-2C)alkyl, heteroaryl, heteroaryl-(1-2C)alkyl, (3-8C)cycloalkyl, (3-8C)cycloalkyl-(1-2C)alkyl, heterocyclyl, or heterocyclyl-(1-2C)alkyl;
Z is selected from O, CRₑR_{f}, NRₑ, SiRₑR_{f}, S, SO or SO₂, wherein Rₑ and R_{f} are independently selected from H or (1-2C)alkyl;
R_{P1} and R_{P2} are selected from (1-6C)alkyl, (4-6C)cycloalkyl or C₆H_{z}Me_{(5-z)} (where z is an integer between 0 and 5);
R_{B1} and R_{B2} are of the formula C₆XₙH₍₅₋ₙ₎ (where n is an integer between 1-5) and
wherein each X is a halo or CF₃; and
each R₁ and R₂ is independently selected from (1-4C)alkyl, halo, trifluoromethyl, trifluoromethoxy, amino, cyano, hydroxy, nitro, S(O)_{y}Rₒ (where y is 0, 1 or 2), aryl, heteroaryl, NRₚR_{q}, ORₚ, wherein Rₒ is selected from (1-2C)alkyl or OH, and wherein
Rₚ and R_{q} are each independently selected from H or (1-4C)alkyl; and
integers a and b are independently selected from 0 to 3.

2. A compound according to claim 1, wherein the distance between the P atom and the B atom is between 4.4 Å and 4.9 Å.

3. A compound according to claim 1 or claim 2, wherein R_{P1} and R_{P2} are each of the formula C₆H_{z}Me_{(5-z)} (where z is an integer between 0 and 5).

4. A compound according to any preceding claim, wherein R_{P1} and R_{P2} are selected from phenyl, C₆H₄Me (2-, 3- and 4-isomers), C₆H₃Me₂ (2,3-, 2,4-, 2,5-, 2,6-, 3,4-, and 3,5-isomers), C₆H₂Me₃ (2,3,4-, 2,3,5-, 2,3,6-, 2,4,5-, 3,4,5-, 2,5,6- and 2,4,6-isomers), C₆HMe₄ (2,3,4-isomer) or C₆Me₅.

5. A compound according to any preceding claim, wherein each X is a fluoro, chloro or CF₃, optionally each X is a fluoro.

6. A compound according to any preceding claim, wherein Y is selected from CRₐR_{b}, NR_{b}, O, SiR_{c}R_{d}, C=CR_{c}R_{d}, or S, wherein Rₐ and R_{b} are independently selected from one or more groups comprising H, (1-4C)alkyl, aryl or aryl-(1-2C)alkyl, and R_{c} and R_{d} are independently selected from H or (1-2C)alkyl;
optionally wherein Y is CRₐR_{b}, wherein Rₐ and R_{b} are independently selected from one or more groups comprising H or (1-4C)alkyl.

7. A compound according to any preceding claim, wherein Z is selected from O or CRₑR_{f} and wherein Rₑ and R_{f} are H or methyl.

8. A compound according to any preceding claim, wherein each R₁ and R₂ is independently selected from (1-4C)alkyl, halo, SO₃H, aryl, NRₚR_{q}, ORₚ, and wherein Rₚ and R_{q} are each independently selected from H, (1-4C)alkyl or aryl; and
integers a and b are independently selected from 0 or 1; optionally integers a and b are both 0

9. A compound according to any preceding claim, wherein said compound has the structure lc shown below: 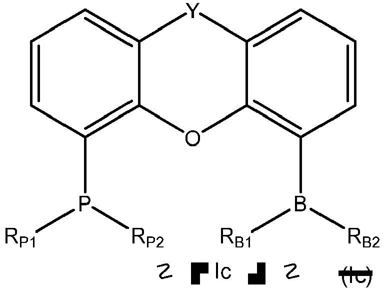 wherein R_{P1}, R_{P2}, R_{B1}, R_{B2}, and Y are as defined in any one of the preceding claims.

10. A compound according to claim 1, having the following structure:

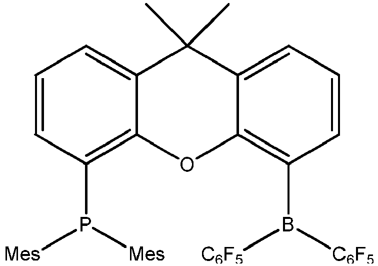

11. A catalytic composition comprising a compound of formula lb, as defined in any one of the preceding claims, associated with a suitable solid support.

12. The use of a compound of formula Ib as defined in any one of claims 1 to 10, or a composition as defined in claim 11, in small molecule activation.

13. The use according to claim 12, wherein the small molecule is selected from H₂, CO₂, NO, CO, SO₂, N₂O, a (2-6C)alkyne, PhCCH or a (2-4C)alkene; optionally wherein the small molecule is H₂, CO₂ or N₂O.

14. The use of a compound of formula lb, as defined in any one of claims 1 to 10, or a catalytic composition as defined in claim 11, in catalysis.

15. The use according to claim 14, wherein the catalysis is hydrogenation, hydroamination, hydroboration, hydrosilylation or CO₂ reduction;
optionally wherein the catalysis is hydrogenation or is hydroboration.

16. The use of a compound of formula lb as defined in any one of claims 1 to 10, or a catalytic composition as defined in claim 11, in the detection of a small molecule.

17. The use according to claim 16, wherein the small molecule is selected from H₂, CO₂, NO, CO, SO₂, N₂O or a (2-4C)alkene;
optionally wherein the small molecule is N₂O.

18. The use according to claim 16 or 17, wherein the detection of a small molecule results in a detectable change in property (e.g. change in optical/ electrical properties).

19. The use according to any one of claims 16 to 18, wherein the detection of a small molecule results in a detectable change in the absorption and/or emission spectrum of a compound of formula lb, as defined in any one of claims 1 to 10;
optionally wherein the detectable change in the absorption and/or emission spectrum is a colour change.

20. A process of detecting nitrous oxide which comprises contacting or reacting nitrous oxide with a compound of formula lb, as defined in any one of claims 1 to 10, or a composition as defined in claim 11.

## Patentansprüche

1. Verbindung von Formel Ib, oder Salz davon: 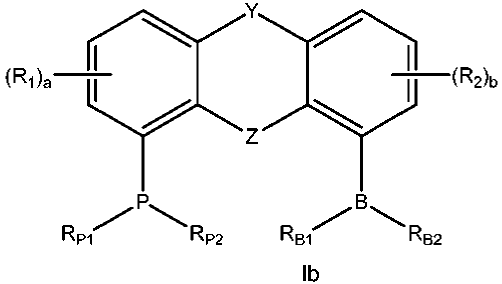 wobei:
Y nicht vorhanden ist oder ausgewählt ist aus CRₐR_{b}, NR_{b}, O, SiR_{c}R_{d}, C=CR_{c}R_{d} oder S, wobei Rₐ und R_{b} unabhängig ausgewählt sind aus einer oder mehreren Gruppen, umfassend H, (1-6C)-Alkyl, (2-6C)-Alkenyl, (2-6C)-Alkinyl, (1-6C)-Alkoxy, Aryl, Aryl-(1-2C)-Alkyl, Heteroaryl, Heteroaryl-(1-2C)-Alkyl, (3-8C)-Cycloalkyl, (3-8C)-Cycloalkyl-(1-2C)-Alkyl, Heterocyclyl, Heterocyclyl-(1-2C)-Alkyl, Cyano, Nitro, Hydroxy oder Halogen, und R_{c} und R_{d} unabhängig ausgewählt sind aus Wasserstoff, (1-4C)-Alkyl, (1-6C)-Alkoxy, Aryl, Aryl-(1-2C)-Alkyl, Heteroaryl, Heteroaryl-(1-2C)-Alkyl, (3-8C)-Cycloalkyl, (3-8C)-Cycloalkyl-(1-2C)-Alkyl, Heterocyclyl oder Heterocyclyl-(1-2C)-Alkyl;
Z ausgewählt ist aus O, CRₑR_{f}, NRₑ, SiRₑR_{f}, S, SO oder SO₂, wobei Rₑ und Rf unabhängig ausgewählt sind aus H oder (1-2C)-Alkyl;
R_{P1} und R_{P2} ausgewählt sind aus (1-6C)-Alkyl, (4-6C)-Cycloalkyl oder C₆H_{z}Me_{(5-z)} (wobei z eine ganze Zahl zwischen 0 und 5 ist);
R_{B1} und R_{B2} von Formel C₆XₙH₍₅₋ₙ₎ sind (wobei n eine ganze Zahl zwischen 1-5 ist) und wobei jedes X ein Halogen oder CF₃ ist; und
jedes R₁ und R₂ unabhängig ausgewählt ist aus (1-4C)-Alkyl, Halogen, Trifluormethyl, Trifluormethoxy, Amino, Cyano, Hydroxy, Nitro, S(O)_{y}R₀ (wobei y 0, 1 oder 2 ist), Aryl, Heteroaryl, NRₚR_{q}, ORₚ, wobei Rₒ ausgewählt ist aus (1-2C)-Alkyl oder OH, und wobei Rₚ und R_{q} jeweils unabhängig ausgewählt sind aus H oder (1-4C)-Alkyl; und
die ganzen Zahlen a und b unabhängig ausgewählt sind aus 0 bis 3.

2. Verbindung nach Anspruch 1, wobei der Abstand zwischen dem P-Atom und dem B-Atom zwischen 4,4 Ä und 4,9 Ä ist.

3. Verbindung nach Anspruch 1 oder Anspruch 2, wobei R_{P1} und R_{P2} jeweils von der Formel C₆H_{z}e_{(5-z)} ist (wobei z eine ganze Zahl zwischen 0 und 5 ist).

4. Verbindung nach einem vorherigen Anspruch, wobei R_{P1} und R_{P2} ausgewählt sind aus Phenyl, C₆H₄Me (2-, 3- und 4-Isomeren), C₆H₃Me₂ (2,3-, 2,4-, 2,5-, 2,6-, 3,4-, und 3,5-Isomeren), C₆H₂Me₃ (2,3,4-, 2,3,5-, 2,3,6-, 2,4,5-, 3,4,5-, 2,5,6- und 2,4,6-Isomeren), C₆HMe₄ (2,3,4-Isomer) oder C₆Me₅.

5. Verbindung nach einem vorherigen Anspruch, wobei jedes X ein Fluor, Chlor oder CF₃ ist, optional jedes X ein Fluor ist.

6. Verbindung nach einem vorherigen Anspruch, wobei Y ausgewählt ist aus CRₐR_{b}, NR_{b}, O, SiR_{c}R_{d}, C=CR_{c}R_{d}, oder S, wobei Rₐ und R_{b} unabhängig ausgewählt sind aus einer oder mehreren Gruppen, umfassend H, (1-4C)-Alkyl, Aryl oder Aryl-(1-2C)-Alkyl, und R_{c} und R_{d} unabhängig ausgewählt sind aus H oder (1-2C)-Alkyl;
optional wobei Y CRₐR_{b} ist, wobei Rₐ und R_{b} unabhängig ausgewählt sind aus einer oder mehreren Gruppen, umfassend H oder (1-4C)-Alkyl.

7. Verbindung nach einem vorherigen Anspruch, wobei Z ausgewählt ist aus O oder CRₑR_{f} und wobei Rₑ und R_{f} H oder Methyl sind.

8. Verbindung nach einem vorherigen Anspruch, wobei jedes R₁ und R₂ unabhängig ausgewählt ist aus (1-4C)-Alkyl, Halogen, SO₃H, Aryl, NRₚR_{q}, ORₚ, und wobei Rₚ und R_{q} jeweils unabhängig ausgewählt sind aus H, (1-4C)-Alkyl oder Aryl; und
die ganzen Zahlen a und b unabhängig ausgewählt sind aus 0 oder 1; optional die ganzen Zahlen a und b beide 0 sind.

9. Verbindung nach einem vorherigen Anspruch, wobei die Verbindung die unten gezeigte Struktur Ic aufweist: 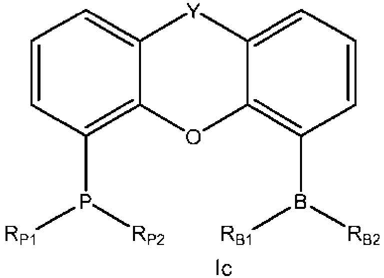 wobei R_{P1}, R_{P2}, R_{B1}, R_{B2} und Y wie definiert in einem der vorherigen Ansprüche sind.

10. Verbindung nach Anspruch 1, die die folgende Struktur aufweist:

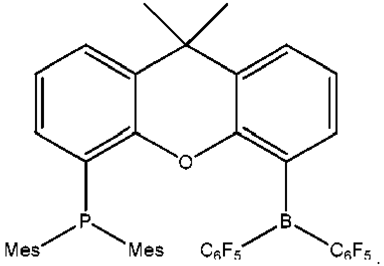

11. Katalytische Zusammensetzung, umfassend eine Verbindung von Formel Ib, wie definiert in einem der vorherigen Ansprüche, in Verbindung mit einem geeigneten festen Träger.

12. Verwendung einer Verbindung der Formel Ib, wie definiert in einem der Ansprüche 1 bis 10, oder einer Zusammensetzung, wie definiert in Anspruch 11, bei Aktivierung kleiner Moleküle.

13. Verwendung nach Anspruch 12, wobei das kleine Molekül ausgewählt ist aus H₂, CO₂ NO, CO, SO₂, N₂O, einem (2-6C)-Alkyn, PhCCH oder einem (2-4C)-Alken; optional wobei das kleine Molekül H₂, CO₂ oder N₂O ist.

14. Verwendung einer Verbindung von Formel Ib, wie definiert in einem der Ansprüche 1 bis 10, oder einer katalytischen Zusammensetzung, wie definiert in Anspruch 11, in Katalyse.

15. Verwendung nach Anspruch 14, wobei die Katalyse Hydrierung, Hydroaminierung, Hydroborierung, Hydrosilylierung oder CO₂-Reduktion ist; optional wobei die Katalyse Hydrierung oder Hydroborierung ist.

16. Verwendung einer Verbindung von Formel Ib, wie definiert in einem der Ansprüche 1 bis 10, oder einer katalytischen Zusammensetzung, wie definiert in Anspruch 11, bei der Detektion eines kleinen Moleküls.

17. Verwendung nach Anspruch 16, wobei das kleine Molekül ausgewählt ist aus H₂, CO₂, NO, CO, SO₂, N_{2O} oder einem (2-4C)-Alken;
wobei das kleine Molekül optional N₂O ist.

18. Verwendung nach Anspruch 16 oder 17, wobei die Detektion eines kleinen Moleküls in einer detektierbaren Eigenschaftsänderung resultiert (z. B. Änderung einer optischen/elektrisehen Eigenschaft).

19. Verwendung nach einem der Ansprüche 16 bis 18, wobei die Detektion eines kleinen Moleküls in einer detektierbaren Änderung des Absorptions- und/oder Emissionsspektrums einer Verbindung von Formel Ib resultiert, wie es in einem der Ansprüche 1 bis 10 definiert ist;
optional wobei die detektierbare Änderung des Absorptions- und/oder Emissionsspektrums eine Farbänderung ist.

20. Verfahren zum Detektieren von Distickstoffoxid, umfassend ein Inkontaktbringen oder Reagieren von Distickstoffoxid mit einer Verbindung von Formel Ib, wie definiert in einem der Ansprüche 1 bis 10, oder einer Zusammensetzung, wie definiert in Anspruch 11.

## Revendications

1. Composé de formule Ib, ou sel de celui-ci : 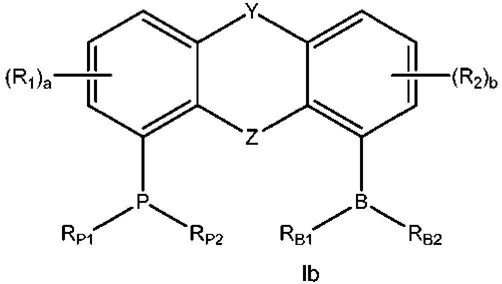 dans laquelle :
Y est absent ou choisi parmi un groupe CRₐR_{b}, NR_{b}, un atome O, un groupe SiR_{c}R_{d}, C=CR_{c}R_{d}, ou un atome S, Rₐ et R_{b} étant indépendamment choisis parmi un ou plusieurs groupes comprenant un atome H, un groupe (1-6C)alkyle, (2-6C)alcényle, (2-6C)alcynyle, (1-6C)alcoxy, aryle, aryl-(1-2C)alkyle, hétéroaryle, hétéroaryl-(1-2C)alkyle, (3-8C)cycloalkyle, (3-8C)cycloalkyl-(1-2C)alkyle, hétérocyclyle, hétérocyclyl-(1-2C)alkyle, cyano, nitro, hydroxy ou halogéno, et R_{c} et R_{d} étant indépendamment choisis parmi un atome d'hydrogène, un groupe (1-4C)alkyle, (1-6C)alcoxy, aryle, aryl-(1-2C)alkyle, hétéroaryle, hétéroaryl-(1-2C)alkyle, (3-8C)cycloalkyle, (3-8C)cycloalkyl-(1-2C)alkyle, hétérocyclyle ou hétérocyclyl-(1-2C)alkyle;
Z est choisi parmi un atome O, un groupe CRₑR_{f}, NRₑ, SiRₑR_{f}, un atome S, un groupe SO ou SO₂, Rₑ et Rf étant indépendamment choisis parmi un atome H ou un groupe (1-2C)alkyle ;
R_{P1} et R_{P2} sont choisis parmi un groupe (1-6C)alkyle, (4-6C)cycloalkyle ou C₆H_{z}Me_{(5-z)} (où z représente un entier compris entre 0 et 5) ;
R_{B1} et R_{B2} sont de la formule C₆XₙH₍₅₋ₙ₎ (où n représente un entier compris entre 1 à 5) et chaque X représentant un groupe halogéno ou CF₃; et
chaque R₁ et R₂ est indépendamment choisi parmi un groupe (1-4C)alkyle, halogéno, trifluorométhyle, trifluorométhoxy, amino, cyano, hydroxy, nitro, S(O)_{y}Rₒ (où y vaut 0, 1 ou 2), aryle, hétéroaryle, NRₚR_{q}, ORₚ, Rₒ étant choisi parmi un groupe (1-2C)alkyle ou OH, et Rₚ et R_{q} étant indépendamment choisis parmi un atome H ou un groupe (1-4C)alkyle ; et
les entiers a et b sont indépendamment choisis parmi 0 à 3.

2. Composé selon la revendication 1, la distance entre l'atome P et l'atome B étant comprise entre 4,4 Å et 4,9 Å.

3. Composé selon la revendication 1 ou la revendication 2, R_{P1} et R_{P2} étant chacun de la formule C₆H_{z}Me_{(5-z)} (où z représente un entier compris entre 0 et 5).

4. Composé selon l'une quelconque des revendications précédentes, R_{P1} et R_{P2} étant choisis parmi un groupe phényle, C₆H₄Me (isomères en position 2, 3 et 4), C₆H₃Me₂ (isomères en positions 2,3, 2,4, 2,5, 2,6, 3,4 et 3,5), C₆H₂Me₃ (isomères en positions 2,3,4, 2,3,5, 2,3,6, 2,4,5, 3,4,5, 2,5,6 et 2,4,6), C₆HMe₄ (isomère en positions 2,3,4) ou C₆Me₅.

5. Composé selon l'une quelconque des revendications précédentes, chaque X représentant un groupe fluoro, chloro ou CF₃, éventuellement chaque X représentant un groupe fluoro.

6. Composé selon l'une quelconque des revendications précédentes, Y étant choisi parmi un groupe CRₐR_{b}, NR_{b}, un atome O, un groupe SiR_{c}R_{d}, C=CR_{c}R_{d}, ou un atome S, Rₐ et R_{b} étant indépendamment choisis parmi un ou plusieurs groupes comprenant un atome H, un groupe (1-4C)alkyle, aryle ou aryl-(1-2C)alkyle, et R_{c} et R_{d} étant indépendamment choisis parmi un atome H ou un groupe (1-2C)alkyle ;
éventuellement Y représentant un groupe CRₐR_{b}, Rₐ et R_{b} étant indépendamment choisis parmi un ou plusieurs groupes comprenant un atome H ou un groupe (1-4C)alkyle.

7. Composé selon l'une quelconque des revendications précédentes, Z étant choisi parmi un atome O ou un groupe CRₑR_{f} et Rₑ et Rf représentant un atome H ou un groupe méthyle.

8. Composé selon l'une quelconque des revendications précédentes, chaque R₁ et R₂ étant indépendamment choisi parmi un groupe (1-4C)alkyle, halogéno, SO₃H, aryle, NRₚR_{q}, ORₚ, et Rₚ et R_{q} étant chacun indépendamment choisis parmi un atome H, un groupe (1-4C)alkyle ou aryle ; et les entiers a et b étant indépendamment choisis parmi 0 ou 1; éventuellement les entiers a et b valant tous les deux 0.

9. Composé selon l'une quelconque des revendications précédentes, ledit composé ayant la structure Ic indiquée ci-dessous : 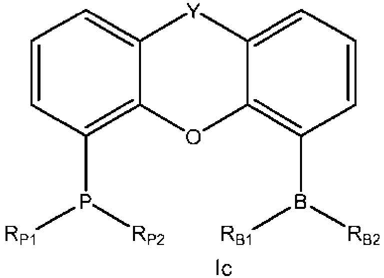 dans laquelle R_{P1}, R_{P2}, R_{B1}, R_{B2} et Y sont tels que définis dans l'une quelconque des revendications précédentes.

10. Composé selon la revendication 1, ayant la structure suivante :

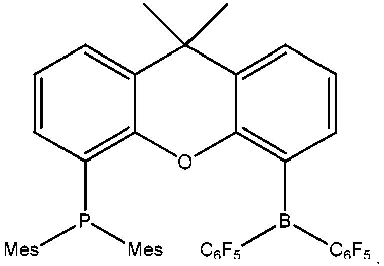

11. Composition catalytique comprenant un composé de formule Ib, tel que défini dans l'une quelconque des revendications précédentes, associé à un support solide approprié.

12. Utilisation d'un composé de formule Ib tel que défini dans l'une quelconque des revendications 1 à 10, ou composition telle que définie dans la revendication 11, dans une activation par petite molécule.

13. Utilisation selon la revendication 12, ladite petite molécule étant choisie parmi H₂, CO₂ NO, CO, SO₂, N₂O, un (2-6C)alcyne, PhCCH ou un (2-4C)alcène ; éventuellement ladite petite molécule étant H₂, CO₂ ou N₂O.

14. Utilisation d'un composé de formule Ib, tel que défini dans l'une quelconque des revendications 1 à 10, ou d'une composition catalytique telle que définie dans la revendication 11, dans une catalyse.

15. Utilisation selon la revendication 14, ladite catalyse étant une hydrogénation, une hydroamination, une hydroboration, une hydrosilylation ou une réduction par CO₂;
éventuellement ladite catalyse étant une hydrogénation ou étant une hydroboration.

16. Utilisation d'un composé de formule Ib tel que défini dans l'une quelconque des revendications 1 à 10, ou d'une composition catalytique telle que définie dans la revendication 11, dans la détection d'une petite molécule.

17. Utilisation selon la revendication 16, ladite petite molécule étant choisi parmi H₂, CO₂, NO, CO, SO₂, N₂O ou un (2-4C)alcène ;
éventuellement ladite petite molécule étant N₂O.

18. Utilisation selon la revendication 16 ou 17, ladite détection d'une petite molécule conduisant à un changement détectable de propriété (par ex. un changement de propriétés optiques/électriques).

19. Utilisation selon l'une quelconque des revendications 16 à 18, ladite détection d'une petite molécule conduisant à un changement détectable dans le spectre d'absorption et/ou d'émission d'un composé de formule Ib, tel que défini dans l'une quelconque des revendications 1 à 10;
éventuellement ledit changement détectable dans le spectre d'absorption et/ou d'émission étant un changement de couleur.

20. Procédé de détection d'oxyde nitreux qui comprend la mise en contact ou la réaction d'oxyde nitreux avec un composé de formule Ib, tel que défini dans l'une quelconque des revendications 1 à 10, ou une composition telle que définie dans la revendication 11.
